(19) Europäisches Patentamt
European Patent Office
Office européen des brevets

(11) **EP 4 704 331 A1**

(12) **EUROPEAN PATENT APPLICATION**
published in accordance with Art. 153(4) EPC

(43) Date of publication:
04.03.2026 Bulletin 2026/10

(21) Application number: 24796690.6

(22) Date of filing: 28.03.2024

(51) International Patent Classification (IPC):
*H02P 21/12* $^{(2016.01)}$     *H02P 27/06* $^{(2006.01)}$

(52) Cooperative Patent Classification (CPC):
H02P 21/12; H02P 27/06

(86) International application number:
PCT/JP2024/012779

(87) International publication number:
WO 2024/224932 (31.10.2024 Gazette 2024/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 24.04.2023 JP 2023070828

(71) Applicant: DENSO CORPORATION
Kariya-city, Aichi 448-8661 (JP)

(72) Inventors:
• HASHIZUME, Ryoya
Nisshin-city, Aichi 4700111 (JP)
• TOYAMA, Keisuke
Kariya- city, Aichi 4488661 (JP)

(74) Representative: TBK
Bavariaring 4-6
80336 München (DE)

(54) **CONTROL DEVICE FOR POWER CONVERTER, AND PROGRAM**

(57)     A control apparatus (60) includes: a target value calculation unit configured to calculate a target field current to be supplied to a field winding (32) and target d-axis and target q-axis currents to be supplied to armature windings (34U to 34W); an armature control unit configured to perform switching control of upper-arm and lower-arm switches (SUH to SWL) for each phase, which are included in a first electric power converter (20), so as to control d-axis and q-axis currents flowing through the armature windings respectively to the calculated target d-axis and target q-axis currents; and a field control unit configured to perform switching control of a second electric power converter (40) so as to control field current flowing through the field winding to the calculated target field current. Moreover, the target value calculation unit is further configured to calculate the target d-axis current so as to satisfy both a requirement of making torque generated by a rotating electric machine (30) a torque with which a rotor can be kept in a rotation-stopped state and a requirement that the vector of the field current flowing through the field winding have a component that reduces reluctance torque of the rotating electric machine.

FIG.1

**Description**

[CROSS-REFERENCE TO RELATED APPLICATIONS]

The present application is based on Japanese Patent Application No. 2023-070828 filed on April 24, 2023, the contents of which are incorporated by reference into the present application.

[TECHNICAL FIELD]

The present disclosure relates to control apparatuses and programs for electric power converters.

[BACKGROUND ART]

Conventionally, control apparatuses have been known which are applied to vehicles that include a battery, an electric power converter electrically connected with the battery, and a rotating electric machine having armature windings electrically connected with the electric power converter. The known control apparatuses perform switching control of the electric power converter when the vehicle is in a stopped state, thereby causing d-axis current to flow through the armature windings while making q-axis current flowing through the armature windings zero. Consequently, the temperature of the battery is raised with a rotor of the rotating electric machine kept in a rotation-stopped state. As a result, the battery can be warmed up with the vehicle kept in the stopped state. In addition, as an example of the known control apparatuses, there is disclosed a control apparatus in

Patent Document 1.

[PRIOR ART LITERATURE]

[PATENT LITERATURE]

[Patent Document 1]: Japanese Patent No. JP 5259752 B2

[SUMMARY OF THE INVENTION]

There is still room for improvement in the technology of increasing the amount of heat generated by switching control of an electric power converter while keeping a rotor in a rotation-stopped state.

A primary object of the present disclosure is to provide a control apparatus and a program for an electric power converter, which can increase the amount of heat generated by switching control of the electric power converter while keeping a rotor of a rotating electric machine in a rotation-stopped state.

According to a first aspect of the present disclosure, there is provided a control apparatus applicable to a system. The system includes: a power storage unit; a rotating electric machine having armature windings respectively of a plurality of phases and a field winding; a first electric power converter electrically connecting the power storage unit with the armature windings and having upper-arm and lower-arm switches for each phase; and a second electric power converter electrically connecting the power storage unit with the field winding. The control apparatus includes: a target value calculation unit configured to calculate a target field current to be supplied to the field winding and target d-axis and target q-axis currents to be supplied to the armature windings; an armature control unit configured to perform switching control of the upper-arm and lower-arm switches for each phase so as to control d-axis current flowing through the armature windings to the calculated target d-axis current and control q-axis current flowing through the armature windings to the calculated target q-axis current; and a field control unit configured to perform switching control of the second electric power converter so as to control field current flowing through the field winding to the calculated target field current. Moreover, the target value calculation unit is further configured to: calculate the target field current that is sinusoidal; and calculate, based on the calculated target field current and inductances of the rotating electric machine, the target d-axis current so as to satisfy both a requirement of making torque generated by the rotating electric machine a torque with which a rotor of the rotating electric machine can be kept in a rotation-stopped state and a requirement that the vector of the field current flowing through the field winding in a d-q coordinate system have a component that reduces reluctance torque of the rotating electric machine.

According to the first aspect of the present disclosure, the amount of heat generated by the switching control of the upper-arm and lower-arm switches for each phase is increased by suppling, in addition to the d-axis current, the q-axis current to the armature windings. In order to increase the amount of heat generated by the switching control while keeping the rotor of the rotating electric machine in the rotation-stopped state, the control apparatus provided according to the first aspect of the present disclosure is characterized by a method of calculating the target d-axis current that is a target value for the d-axis current and the target field current that is a target value for the field current.

The field current and the d-axis current are related to each other by the inductances of the rotating electric machine. Using this relationship, the target d-axis current is calculated based on the target field current and the inductances of the rotating electric machine. In this case, there are imposed both the requirement of making the torque generated by the rotating electric machine a torque with which the rotor of the rotating electric machine can be kept in the rotation-stopped state and the requirement that the vector of the field current flowing through the field winding in the d-q coordinate system have a component that reduces reluctance torque of the rotating electric machine. Consequently, it becomes possible to increase the amount of heat generated by the switching control of the upper-arm and lower-arm switches for each phase while keeping the rotor in the rotation-stopped state.

According to a second aspect of the present disclosure, the target value calculation unit is further configured to individually calculate a positive amplitude and a negative amplitude of the target field current so that amplitudes of phase currents flowing respectively through the armature windings become equal to each other.

In order to increase the amount of heat generated by the switching control of the upper-arm and lower-arm switches for each phase, it is necessary to prevent a large imbalance from occurring between the amounts of heat generated respectively by the upper-arm and lower-arm switches. Moreover, in order to prevent occurrence of such a large imbalance, it is necessary to make the amplitudes of the phase currents flowing respectively through the armature windings equal to each other. Therefore, the applicant of the present application has studied a method of calculating the target d-axis current based on the phase currents whose amplitudes are equal to each other and then calculating the target field current based on the calculated target d-axis current and the inductances of the rotating electric machine.

However, the inductances of the rotating electric machine change depending on parameters such as the d-axis and q-axis currents, the field current and the electrical angle of the rotor. Therefore, if the target field current is calculated based on the inductances reflecting these parameters and the target d-axis current, the calculated target field current will include harmonic components.

Moreover, the inductance of the field winding is considerably higher than the inductances of the armature windings. Consequently, the control responsiveness of the field current will become low; thus, it will become impossible to make the actual field current follow the harmonic components, resulting in a large deviation of the actual field current from the target field current. As a result, the torque generated by the rotating electric machine will become high so that the rotor cannot be kept in the rotation-stopped state.

In view of the above, the applicant of the present application has also studied a method of calculating the target d-axis current based on the sinusoidal target field current and the inductances of the rotating electric machine. However, since the inductances of the rotating electric machine change depending on the aforementioned parameters, the amplitudes of the target d-axis current calculated based on the target field current and the inductances of the rotating electric machine will become considerably different from the amplitudes of the target q-axis current. Further, this difference leads to differences between the amplitudes of the phase currents flowing respectively through the armature windings, thereby resulting in considerable differences between the amounts of heat generated respectively by the upper-arm and lower-arm switches for each phase.

Based on the results of the various studies, the applicant of the present application has found that the amplitudes of the target d-axis current can be adjusted by individually adjusting the positive and negative amplitudes of the sinusoidal target field current. Hence, according to the second aspect of the present disclosure, the positive and negative amplitudes of the sinusoidal target field current are individually calculated so that the amplitudes of the phase currents flowing respectively through the armature windings become equal to each other. In this case, it is unnecessary to make the field current follow harmonic components; thus, it becomes possible to make the amplitudes of the phase currents flowing respectively through the armature windings equal to each other even when the control responsiveness of the field current is low. As a result, it becomes possible to prevent a large imbalance from occurring between the amounts of heat generated respectively by the upper-arm and lower-arm switches for each phase.

[BRIEF DESCRIPTION OF THE DRAWINGS]

The above-described object, other objects, features and beneficial advantages according to the present disclosure will become more apparent from the following detailed explanation with reference to the accompanying drawings. In the drawings:

    FIG. 1 is an overall configuration diagram of an in-vehicle system according to a first embodiment;
    FIG. 2 is a schematic diagram of a cooling system serving as a heat transfer unit;
    FIG. 3 is a diagram illustrating the changes with time of three-phase AC current, d-axis and q-axis currents and field current during temperature raising control;
    FIG. 4 is a diagram showing electric current vectors in a d-q coordinate system during the temperature raising control;

FIG. 5 is a diagram illustrating the changes with time of three-phase AC current, d-axis and q-axis currents, field current, torque and the amounts of heat generated by switches during temperature raising control according to a comparative example;

FIG. 6 is a diagram illustrating the changes with time of three-phase AC current, d-axis and q-axis currents, field current, torque and the amounts of heat generated by switches during temperature raising control according to another comparative example;

FIG. 7 is a diagram illustrating the changes with time of three-phase AC current, d-axis and q-axis currents, field current, torque and the amounts of heat generated by switches during the temperature raising control according to the first embodiment;

FIG. 8 is a block diagram illustrating the temperature raising control according to the first embodiment;

FIG. 9 is a flowchart illustrating steps of a process for performing the temperature raising control according to the first embodiment;

FIG. 10 is a flowchart illustrating steps of a process for determining target field current according to the first embodiment;

FIG. 11 is a diagram showing electric current vectors in a d-q coordinate system during temperature raising control according to a modification of the first embodiment;

FIG. 12 is a diagram showing electric current vectors in a d-q coordinate system during temperature raising control according to another modification of the first embodiment;

FIG. 13 is a diagram showing electric current vectors in a d-q coordinate system during temperature raising control according to yet another modification of the first embodiment;

FIG. 14 is a diagram showing electric current vectors in a d-q coordinate system during temperature raising control according to still another modification of the first embodiment;

FIG. 15 is a block diagram illustrating temperature raising control according to a second embodiment;

FIG. 16 is a block diagram illustrating temperature raising control according to a third embodiment;

FIG. 17 is a flowchart illustrating steps of a process for determining target field current according to the third embodiment;

FIG. 18 is a block diagram illustrating temperature raising control according to a fourth embodiment; and

FIG. 19 is a flowchart illustrating steps of a process for determining target field current according to the fourth embodiment.

[EMBODIMENTS FOR CARRYING OUT THE INVENTION]

[First Embodiment]

Hereinafter, a first embodiment embodying a control apparatus according to the present disclosure will be described with reference to the drawings. In the present embodiment, the control apparatus is included in a system that is installed in a vehicle such as an electric vehicle or a hybrid vehicle.

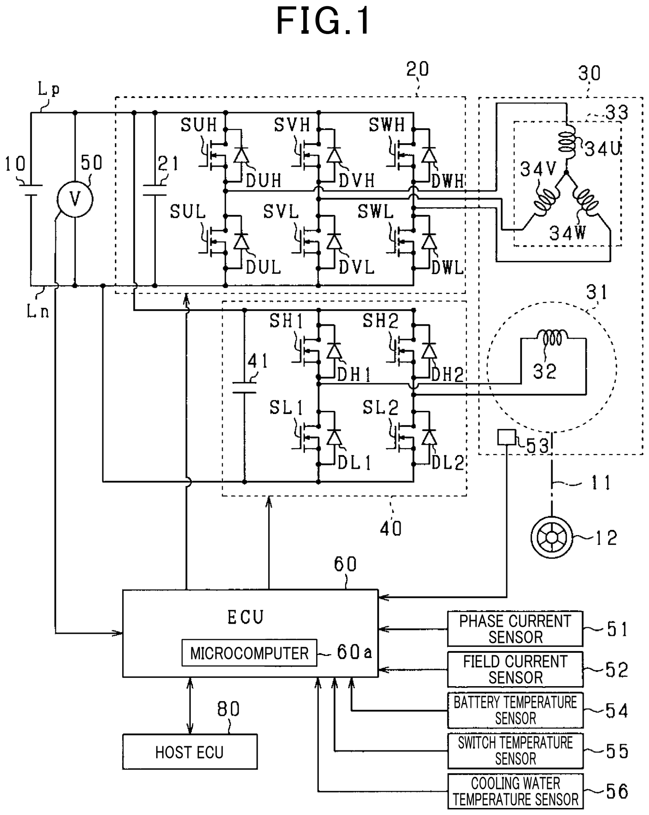

As shown in FIG. 1, the system includes a storage battery 10 (corresponding to a "power storage unit"), two electric power converters, and a rotating electric machine 30. In the present embodiment, the rotating electric machine 30 is configured as a wound-field rotating electric machine. Moreover, the rotating electric machine 30 has a forward saliency such that the d-axis inductance Ld is higher than the q-axis inductance Lq.

In the present embodiment, the storage battery 10 is implemented by an assembled battery that is constituted of battery cells connected in series with each other. In addition, secondary battery cells, such as lithium-ion battery cells, may be employed as the battery cells constituting the storage battery 10. The storage battery 10 can be charged by an external charger provided outside the vehicle. The external charger may be, for example, a stationary charger.

The rotating electric machine 30 is a machine which applies rotational power to drive wheels 12 of the vehicle, thereby rotating the drive wheels 12. The rotating electric machine 30 includes a rotor 31. The rotor 31 includes a rotor core and a plurality of field salient pole portions extending radially from the rotor core. On each of the salient pole portions, there is wound a field winding 32. The rotor 31 includes a rotating shaft that is configured so that mechanical power can be transmitted between it and the drive wheels 12 of the vehicle via a power transmission mechanism 11 provided in the vehicle. Specifically, torque generated by the rotating electric machine 30 that functions as an electric motor is transmitted to the drive wheels 12 via the power transmission mechanism 11, causing the drive wheels 12 to rotate. Consequently, the vehicle runs with the rotation of the drive wheels 12. In addition, the power transmission mechanism 11 may include, for example, a speed change gear and a shaft. The rotating electric machine 30 may be, for example, an in-wheel motor that is provided integrally with one of the drive wheels 12 of the vehicle, or an on-board motor that is provided on a body of the vehicle.

The rotating electric machine 30 also includes a stator 33. The stator 33 includes an armature core and armature windings. The armature core has an annular back yoke part and a plurality of tooth parts extending radially from the back yoke part toward the rotor 31. The armature windings are U-phase, V-phase and W-phase windings 34U, 34V and 34W that are star-connected in a state of being offset from each other by 120° in electrical angle.

The system includes an inverter 20 (corresponding to a "first electric power converter") and a field energization circuit 40 (corresponding to a "second electric power converter"). The inverter 20 converts direct current from the storage battery 10 into alternating current and supplies the alternating current to the armature windings. The inverter 20 includes three series connection units respectively corresponding to the U, V and W phases and each consisting of a corresponding one of U-phase, V-phase and W-phase upper-arm switches SUH, SVH and SWH and a corresponding one of U-phase, V-phase and W-phase lower-arm switches SUL, SVL and SWL. In the present embodiment, each of the switches SUH, SVH, SWH, SUL, SVL and SWL is implemented by an N-channel MOSFET. Moreover, the switches SUH, SVH, SWH, SUL, SVL and SWL respectively include body diodes DUH, DVH, DWH, DUL, DVL and DWL.

The drains of the U-phase, V-phase and W-phase upper-arm switches SUH, SVH, and SWH, which are higher-potential-side terminals, are connected with a positive electrode terminal of the storage battery 10 via a higher-potential-side electrical path Lp. On the other hand, the sources of the U-phase, V-phase and W-phase lower-arm switches SUL, SVL and SWL, which are lower-potential-side terminals, are connected with a negative electrode terminal of the storage battery 10 via a lower-potential-side electrical path Ln. Each of the electrical paths Lp and Ln is formed of an electroconductive member such as a busbar. The inverter 20 also includes a first capacitor 21 which is a smoothing capacitor. In addition, the first capacitor 21 may be provided outside the inverter 20.

The field energization circuit 40 supplies electric current from the storage battery 10 to the field winding 32. In the present embodiment, the field energization circuit 40 is configured as a full-bridge circuit which includes both a series connection unit consisting of a first upper-arm switch SH1 and a first lower-arm switch SL1 and a series connection unit consisting of a second upper-arm switch SH2 and a second lower-arm switch SL2. Each of the switches SH1, SH2, SL1 and SL2 is implemented by an N-channel MOSFET. Moreover, the switches SH1, SH2, SL1 and SL2 respectively include body diodes DH1, DH2, DL1 and DL2. Each of the switches SH1, SH2, SL1 and SL2 is a bidirectional switch which allows, in an ON state thereof, both flow of electric current in a direction from its drain to its source and flow of electric current in a direction from its source to its drain.

The drains of the first and second upper-arm switches SH1 and SH2, which are higher-potential-side terminals, are connected with the positive electrode terminal of the storage battery 10 via the higher-potential-side electrical path Lp. On the other hand, the sources of the first and second lower-arm switches SL1 and SL2, which are lower-potential-side terminals, are connected with the negative electrode terminal of the storage battery 10 via the lower-potential-side electrical path Ln. A first end of the field winding 32 is connected to a junction point between the first upper-arm switch SH1 and the first lower-arm switch SL1 via a brush (not shown). On the other hand, a second end of the field winding 32 is connected to a junction point between the second upper-arm switch SH2 and the second lower-arm switch SL2 via another brush (not shown). The field energization circuit 40 also includes a second capacitor 41 which is a smoothing capacitor. In addition, the second capacitor 41 may be provided outside the field energization circuit 40. Moreover, instead of the configuration having the second capacitor 41 provided individually in the field energization circuit 40 and the first capacitor 21 provided individually in the inverter 20, a configuration having a common capacitor to the inverter 20 and the field energization circuit 40 may alternatively be employed. In this case, for example, the second capacitor 41 may be omitted from the system.

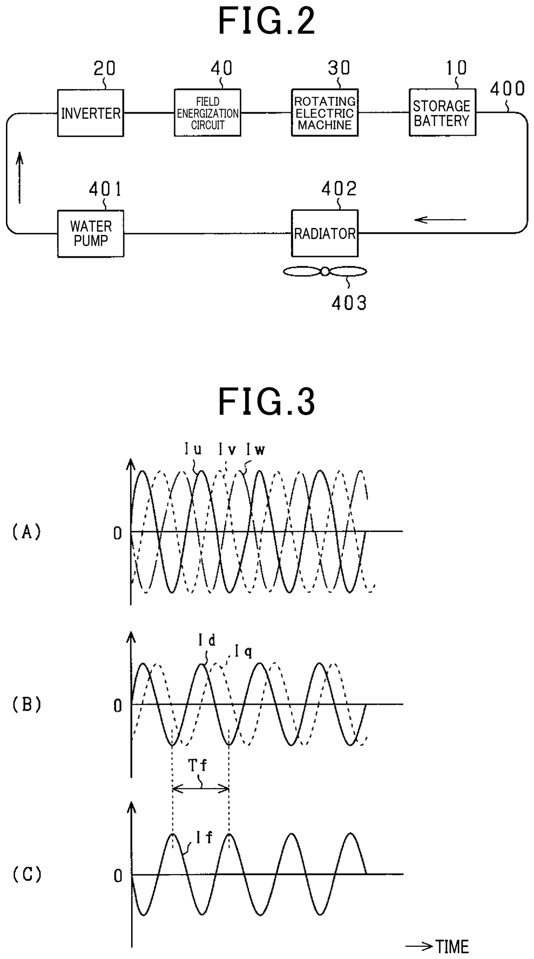

As shown in FIG. 2, the system also includes an apparatus for cooling the inverter 20, the field energization circuit 40, the rotating electric machine 30 and the storage battery 10 when switching control of the inverter 20 is performed to drive the vehicle. Specifically, the vehicle includes a circulation path 400 through which cooling water circulates, an electric water pump 401, a radiator 402 and an electric fan 403. The water pump 401 circulates the cooling water upon being driven by supply of electric power thereto. In the example shown in FIG. 2, the inverter 20, the field energization circuit 40, the rotating electric machine 30 and the storage battery 10 are arranged in this order on the downstream side of the water pump 401 in the circulation path 400. It should be noted that the order of arrangement of the aforementioned components in the circulation path 400 is not limited to the order shown in FIG. 2.

The radiator 402 is provided between the water pump 401 and the storage battery 10 in the circulation path 400. The radiator 402 cools the cooling water flowing thereinto through the circulation path 400, and supplies the cooled cooling water to the water pump 401. Specifically, the cooling water flowing into the radiator 402 is cooled by wind that is blown onto the radiator 402 with running of the vehicle and/or wind that is blown onto the radiator 402 with rotation of the fan 403.

In addition, the water pump 401 and the fan 403 may be driven by a control apparatus different from a control apparatus 60 included in the system. However, in the present embodiment, for sake of convenience, it is assumed that the water pump 401 and the fan 403 are driven by the control apparatus 60 included in the system.

Referring back to FIG. 1, the system also includes a voltage sensor 50, a phase current sensor 51, a field current sensor 52, an angle sensor 53, a battery temperature sensor 54, a switch temperature sensor 55 and a cooling water temperature sensor 56. The voltage sensor 50 detects the voltage of the storage battery 10. The phase current sensor 51 detects at least two of phase currents flowing respectively through the U-phase, V-phase and W-phase windings 34U, 34V and 34W. The field current sensor 52 detects field current flowing through the field winding 32. The angle sensor 53 detects the rotation angle (more specifically, the electrical angle) of the rotor 31. The battery temperature sensor 54 detects the temperature of the storage battery 10. The switch temperature sensor 55 detects the temperatures of the switches SUH, SVH, SWH, SUL, SVL and SWL. The cooling water temperature sensor 56 detects the temperature of the cooling water flowing through the circulation path 400.

The system includes the control apparatus 60 and a host control apparatus 80 that is superordinate to the control apparatus 60. The detection values of the sensors 50 to 56 are inputted to the control apparatus 60.

The control apparatus 60 is implemented by an ECU (Electronic Control Unit) which is mainly composed of a microcomputer 60a. The host control apparatus 80 is also implemented by an ECU which is mainly composed of a microcomputer. The control apparatus 60 and the host control apparatus 80 can exchange information with each other.

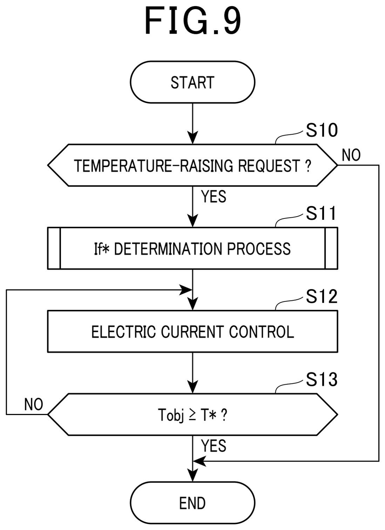

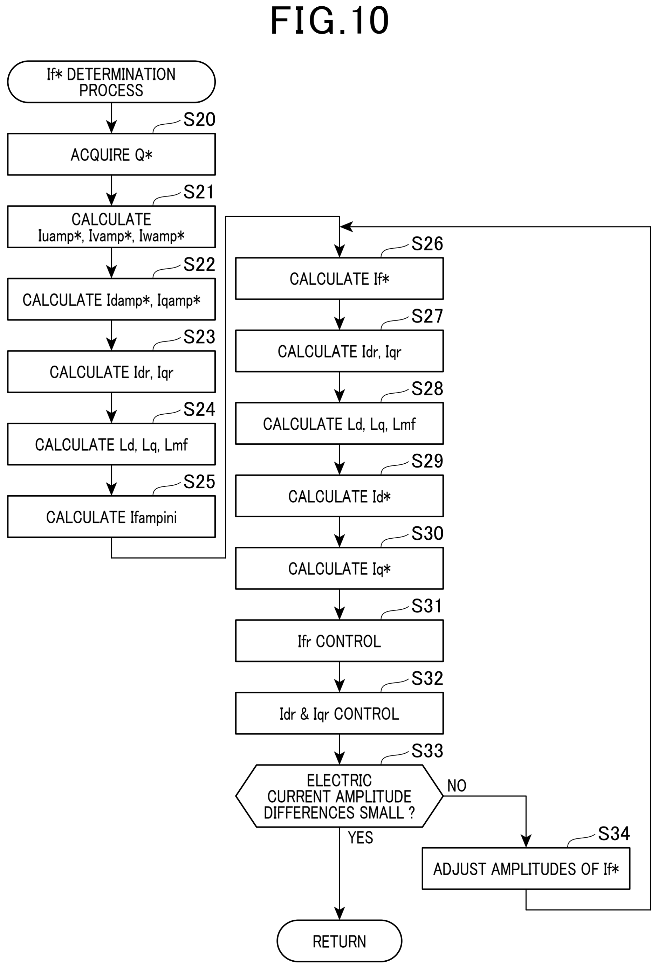

The microcomputer 60a of the control apparatus 60 and the microcomputer of the host control apparatus 80 each include a CPU (Central Processing Unit). The functions of the microcomputer 60a of the control apparatus 60 and the microcomputer of the host control apparatus 80 may be provided by software recorded in a tangible memory device and a computer that executes it, only software, only hardware, or a combination thereof. For example, in the case of each of the microcomputers being configured with an electronic circuit that is hardware, it may be configured with a digital circuit that includes a number of logic circuits, or with an analog circuit. For example, each of the microcomputers may execute programs stored in a non-transitory tangible storage medium that is provided in the microcomputer as a storage unit. The programs may include, for example, programs for performing processes shown in FIGS. 9 and 10 which will be described later. Moreover, methods corresponding to the programs may be carried out by executing sets of instructions constituting the programs. The storage unit may be, for example, a nonvolatile memory. In addition, the programs stored in the storage unit may be downloaded and updated, for example by OTA (Over-The-Air), via a communication network such as the Internet.

In order to excite the field winding 32, the control apparatus 60 performs switching control of the switches constituting the field energization circuit 40. Specifically, in order to control the field current Ifr detected by the field current sensor 52 to a target field current If*, the control apparatus 60 performs switching control of the switches so that a first state and a second state appear alternately. The first state is a state in which: the first upper-arm switch SH1 and the second lower-arm switch SL2 are in an ON state; and the second upper-arm switch SH2 and the first lower-arm switch SL1 are in an OFF state. In contrast, the second state is a state in which: the first upper-arm switch SH1 and the second lower-arm switch SL2 are in an OFF state; and the second upper-arm switch SH2 and the first lower-arm switch SL1 are in an ON state.

With the field winding 32 in an excited state, the control apparatus 60 performs, based on the detection values of the sensors 50 to 56, switching control of the switches constituting the inverter 20 so as to feedback-control a controlled variable of the rotating electric machine 30 to a command value. In the present embodiment, the controlled variable is torque. For each of the three phases, the upper-arm and lower-arm switches of the phase are alternately turned on. By the feedback control, the rotational power of the rotor 31 is transmitted to the drive wheels 12, causing the vehicle to run.

Next, temperature raising control of the storage battery 10 performed by the control apparatus 60 will be described. This control is performed for generating heat by switching control of the inverter 20 and the field energization circuit 40 when the storage battery 10 is charged by an external charger with the vehicle in a stopped state and the temperature Tr of the storage battery 10 detected by the battery temperature sensor 54 is lower than a target temperature T*. The generated heat will be transferred to the storage battery 10 via the cooling water that is circulated through the circulation path 400 by driving the water pump 401. The temperature raising control may be continued, for example, until the temperature Tr of the storage battery 10 reaches the target temperature T*. Moreover, the water pump 401 is continuously driven at least for a time period during which the temperature raising control is performed. In addition, in the present embodiment, the circulation path 400, the cooling water circulating through the circulation path 400 and the water pump 401 together correspond to a "heat transfer unit". By the temperature raising control, the temperature of the storage battery 10 can be quicky raised, thereby shortening the time required for charging the storage battery 10 using an external charger.

In order to enhance the temperature raising capability by the temperature raising control, the control apparatus 60 performs, in the temperature raising control, switching control of the inverter 20 so as to supply sinusoidal d-axis and q-axis currents to the armature windings. At the same time, in order to keep the rotor 31 in a rotation-stopped state and thereby keep the vehicle in the stopped state, the control apparatus 60 performs switching control of the field energization circuit 40 so as to reduce reluctance torque, which is generated by the flow of the d-axis and q-axis currents, by magnet torque.

First, an overview of the temperature raising control will be given below.

The torque Trq generated by the rotating electric machine 30 consists of magnet torque TM and reluctance torque TR, as expressed by the following equation (eq1). In the following equation (eq1), P represents the number of pole pairs of the rotating electric machine 30, and $\varphi f$ represents the magnetic flux generated by the field current flowing through the field winding 32.

$$Trq = TM + TR = P \cdot \varphi f \cdot Iq + P \cdot (Ld - Lq) \cdot Id \cdot Iq \qquad (eq1)$$

In the temperature raising control, the control apparatus 60 performs switching control of the inverter 20 so as to supply sinusoidal AC currents IU, IV and IW of the three phases, which are offset in phase by 120° in electrical angle from each other as shown in FIG. 3(A), respectively to the windings 34U, 34V and 34W of the three phases. In this case, the d-axis and q-axis currents Id and Iq have sinusoidal waveforms as shown in FIG. 3(B). Moreover, the d-axis and q-axis currents Id and Iq have the same frequency; and the phase difference between the d-axis and q-axis currents Id and Iq is 90° in electrical angle.

On the other hand, the magnetic flux φf is proportional to the product of the number of turns Nf of the field winding 32 and the field current If, as expressed by the following equation (eq2).

$$\varphi f \propto Nf \cdot If \qquad (eq2)$$

A requirement that the reluctance torque TR be cancelled out by the magnet torque TM is imposed on the above equation (eq1). Specifically, Trq is set to zero in the above equation (eq1). Consequently, the following equation (eq3) can be derived.

$$\varphi f = -(Ld - Lq) \cdot Id \qquad (eq3)$$

Further, the following equation (eq4) can be derived from the above equations (eq2) and (eq3).

$$If \propto -(Ld - Lq) \cdot Id \,/\, Nf \qquad (eq4)$$

In the present embodiment, Ld > Lq in the above equation (eq4). Therefore, as shown in FIG. 3(C), the control apparatus 60 sets a sinusoidal target field current If* that is different in phase by 180° from the d-axis current Id and has the same frequency as the d-axis current Id. It should be noted that in FIG. 3, Tf represents the period of both the d-axis current Id and the field current If.

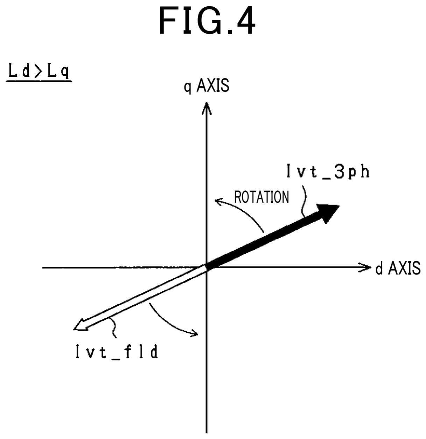

FIG. 4 is a diagram showing the vectors of electric currents, which flow during the temperature raising control, in a d-q coordinate system. Specifically, in FIG. 4, Ivt_3ph indicates the vector of armature current flowing through the armature windings in the d-q coordinate system (hereinafter, to be referred to as the armature current vector); and Ivt_fld indicates the vector of the field current flowing through the field winding 32 in the d-q coordinate system (hereinafter, to be referred to as the field current vector). Since the rotor 31 is in the rotation-stopped state, the armature current vector Ivt_3ph rotates at the frequency of the three-phase AC current. The control apparatus 60 performs switching control of the inverter 20 and the field energization circuit 40 so as to make the phase difference between the rotating armature current vector Ivt_3ph and the field current vector Ivt_fld become 180°. Consequently, the field current vector Ivt_fld comes to have a component that reduces the reluctance torque of the rotating electric machine 30, more specifically a component that makes the reluctance torque close to zero.

In the temperature raising control according to the present embodiment, switching control of the upper-arm and lower-arm switches of the three phases is performed. The heat generated in the inverter 20 as a result of the temperature raising control can be distributed to the three phases and the upper and lower arms of each of the three phases. In this case, in order to increase the amount of heat generated, the applicant of the present application has conducted various studies on temperature raising control methods.

Using the coupling inductance Lmf, the above equation (eq4) can be expressed as the following equation (eq5).

$$I_f = -\frac{L_d - L_q}{L_{mf}} I_d \qquad (eq5)$$

The coupling inductance Lmf (>0) is the inductance of the d-axis magnetic path that includes the back yoke part and tooth parts of the armature core of the stator 33 and the rotor core and field salient pole portions of the rotor 31. Moreover, φf = Lmf × If.

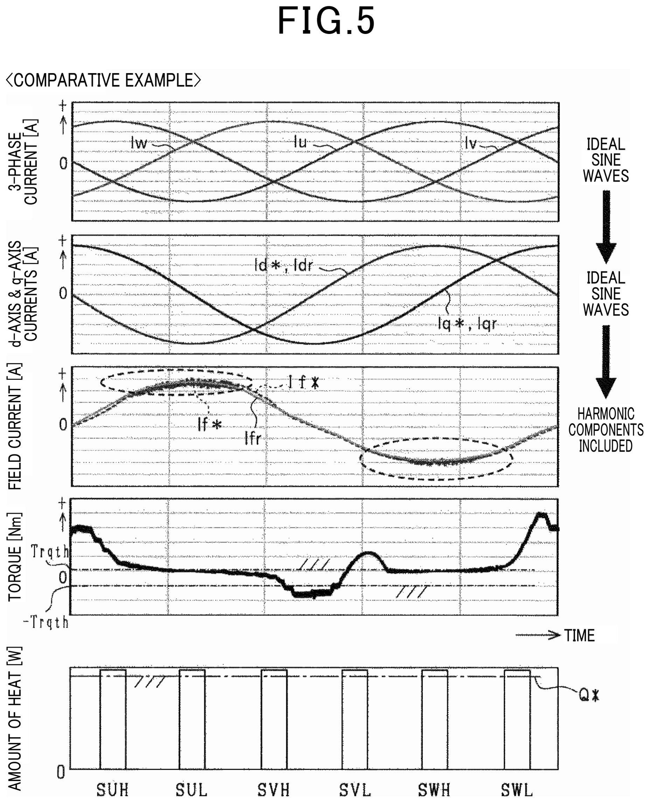

In order to increase the amount of heat generated by the temperature raising control, it is necessary to equalize the amounts of heat generated by the switches SUH, SUL, SVH, SVL, SWH and SWL of the inverter 20. The amounts of heat may be, for example, the amounts of heat [W] generated in the switches per unit time with switching control of the switches. To equalize the amounts of heat generated by the switches, it is necessary to equalize the amplitudes of the three phase currents. Therefore, the applicant of the present application has studied a method of calculating a target d-axis current Id* based on the three phase currents whose amplitudes are equal to each other and then calculating the target field current If* based on the calculated target d-axis current Id* and the inductances of the rotating electric machine 30. Specifically, as shown in FIG. 5, the amplitudes of the target d-axis and target q-axis currents Id* and Iq*, which are converted from the three phase currents whose amplitudes are equal to each other, are also equal to each other. By controlling the field current Ifr to the target field current If* that is calculated based on the target d-axis current Id* and the above equation (eq5), the amounts of heat generated by the switches SUH, SUL, SVH, SVL, SWH and SWL of the inverter 20 can be equalized while making the torque generated by the rotating electric machine 30 during the temperature raising control close to zero.

The d-axis inductance Ld, the q-axis inductance Lq and the coupling inductance Lmf, which are the inductances of the rotating electric machine 30 included in the above equation (eq5), change depending on the d-axis current, the q-axis current and the field current. Specifically, the higher the d-axis current and the field current, the lower the d-axis inductance Ld and the coupling inductance Lmf become due to the influence of magnetic saturation; and the higher the q-axis current Iq, the lower the q-axis inductance Lq becomes due to the influence of magnetic saturation. Moreover, the inductances Ld, Lq and Lmf change depending on the electrical angle as well.

Since the d-axis inductance Ld, the q-axis inductance Lq and the coupling inductance Lmf are dependent on the aforementioned parameters, even if the d-axis current Id used in the above equation (eq5) is sinusoidal current, harmonic components will be included in the field current If, as shown in the areas surrounded by the dashed circles in FIG. 5.

Compared to the inductances of the armature windings, the inductance of the field winding 32 is very high due to, for example, the very large number of turns Nf. Consequently, the control responsiveness of the field current becomes low; thus, it becomes impossible to make the actual field current follow the harmonic components, resulting in a large deviation of the actual field current from the target field current If*. As a result, as shown in FIG. 5, although the amounts of heat generated by the switches SUH, SUL, SVH, SVL, SWH and SWL of the inverter 20 become greater than or equal to a target amount of heat Q*, the torque generated by the rotating electric machine 30 becomes higher than or equal to a torque threshold value Trqth. Here, the torque threshold value Trqth is the torque value at which the drive wheels 12 of the vehicle start rotating. The torque threshold value Trqth may be set to, for example, the upper limit of a range of torque values expected to cause the drive wheels 12 to start rotating. If the torque generated by the rotating electric machine 30 exceeds the torque threshold value Trqth, the user of the vehicle may feel uncomfortable during the external charging of the storage battery 10.

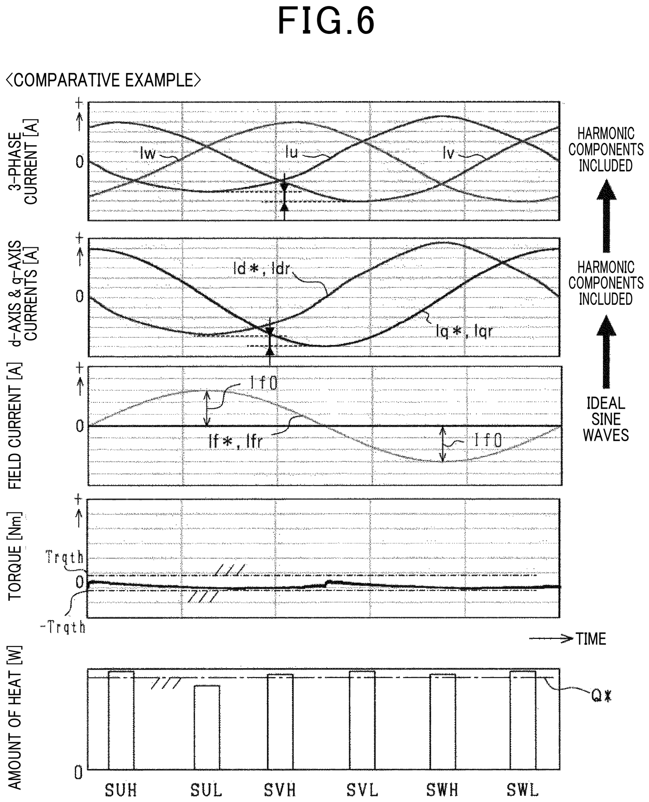

Therefore, the applicant of the present application has also studied a method of calculating a target d-axis current Id* based on an ideal sinusoidal target field current If*, which can equalize the amounts of heat generated by the switches SUH, SUL, SVH, SVL, SWH and SWL of the inverter 20, and the inductances of the rotating electric machine 30. In this case, as shown in FIG. 6, the positive and negative amplitudes If0 of the ideal target field current If* are equal to each other.

Since the d-axis inductance Ld, the q-axis inductance Lq and the coupling inductance Lmf are dependent on the aforementioned parameters, the amplitudes of the target d-axis current Id* calculated based on the target field current If* and the above equation (eq5) become considerably different from the amplitudes of the target q-axis current Iq*, as shown in FIG. 6. Further, this difference leads to differences between the amplitudes of the three phase currents, thereby resulting in considerable differences between the amounts of heat generated by the switches SUH, SUL, SVH, SVL, SWH and SWL of the inverter 20, as shown in FIG. 6. More particularly, in the example shown in FIG. 6, the amount of heat generated by the U-phase lower-arm switch SUL becomes less than the target amount of heat Q*.

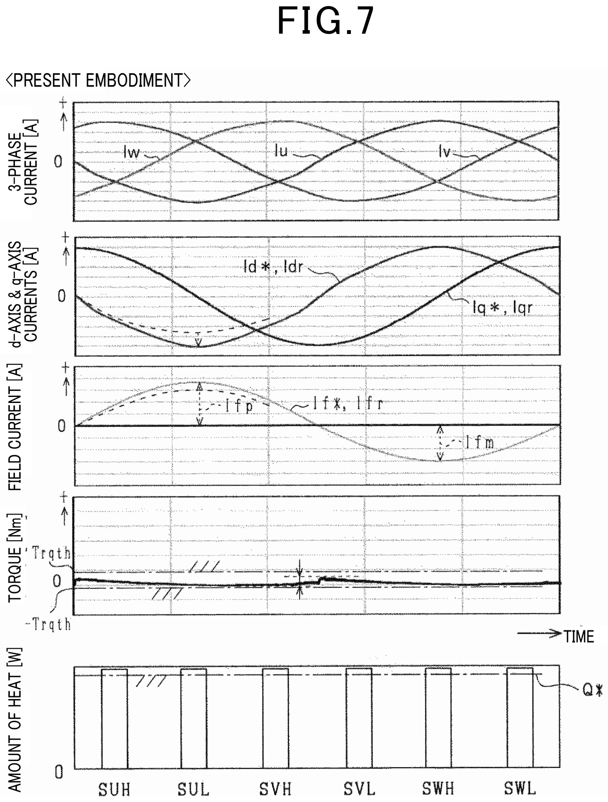

Based on the results of the various studies, the applicant of the present application has found that in the temperature raising control, the amplitudes of the target d-axis current Id* can be adjusted by individually adjusting the positive and negative amplitudes of the sinusoidal target field current If*. Accordingly, in the present embodiment, as shown in FIG. 7, the control apparatus 60 individually adjusts the positive and negative amplitudes Ifp and Ifm of the sinusoidal target field current If* so that the amplitudes of the three phase currents become equal to each other. Further, with the amplitudes of the three phase currents equal to each other, the amounts of heat generated by the switches SUH, SUL, SVH, SVL, SWH and SWL of the inverter 20 also become equal to each other. More particularly, in the example shown in FIG. 7, the control apparatus 60 increases the negative amplitude of the target d-axis current Id* by increasing the positive amplitude Ifp of the target field current If*, thereby making the negative amplitude of the d-axis current Id equal to the negative amplitude of the q-axis current Iq.

With the above method according to the present embodiment, it becomes unnecessary to make the field current Ifr follow harmonic components; thus, it becomes possible to make the amplitudes of the three phase currents equal to each other even when the control responsiveness of the field current Ifr is low. Consequently, it becomes possible to equalize the amounts of heat generated by the switches SUH, SUL, SVH, SVL, SWH and SWL of the inverter 20 while keeping the torque generated by the rotating electric machine 30 at a value lower than the torque threshold value Trqth. As a result, it becomes possible to suitably increase the amount of heat generated during the temperature raising control while keeping the rotor 31 in the rotation-stopped state.

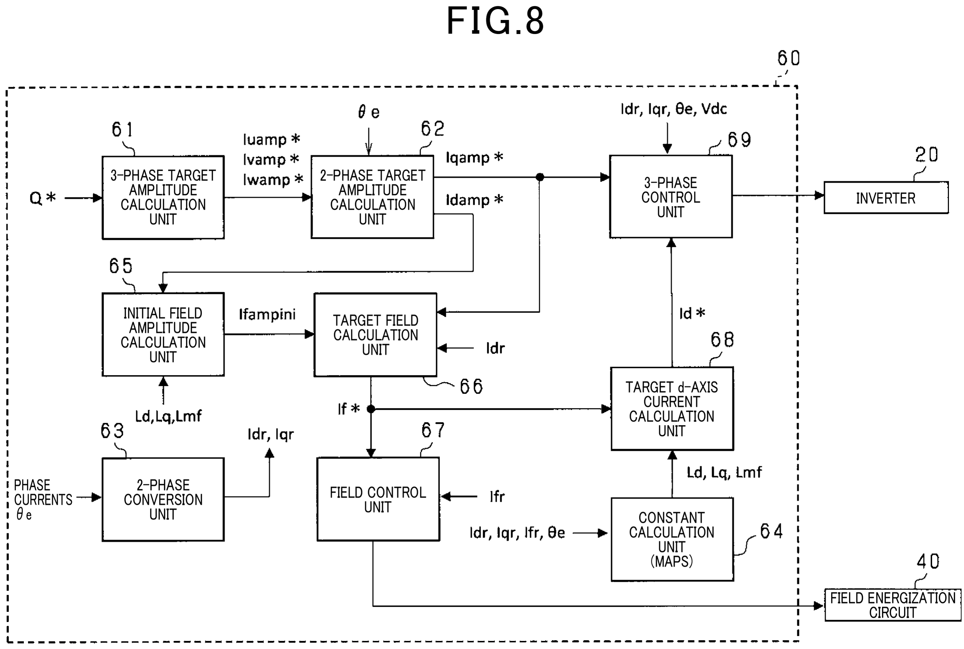

FIG. 8 is a block diagram illustrating the temperature raising control performed by the control apparatus 60 according to the present embodiment.

A three-phase target amplitude calculation unit 61 acquires the target amount of heat Q* from the host control apparatus 80 for each control cycle. Then, based on the acquired target amount of heat Q*, the three-phase target amplitude calculation unit 61 calculates an amplitude Iuamp* of target U-phase current, an amplitude Ivamp* of target V-phase current and an amplitude Iwamp* of target W-phase current. The amplitudes Iuamp*, Ivamp* and Iwamp* have the same value. For example, the three-phase target amplitude calculation unit 61 may calculate the amplitudes Iuamp*, Ivamp* and Iwamp* such that the larger the target amount of heat Q*, the higher the calculated amplitudes Iuamp*, Ivamp* and Iwamp*. In addition, the three-phase target amplitude calculation unit 61 may calculate the amplitudes Iuamp*, Ivamp* and Iwamp* based on, for example, map information and the acquired target amount of heat Q*; the map information associates the amplitudes Iuamp*, Ivamp* and Iwamp* with the target amount of heat Q*.

A two-phase target amplitude calculation unit 62 converts, for each control cycle, the amplitudes Iuamp*, Ivamp* and Iwamp* of the target currents of the respective phases in a three-phase fixed coordinate system into an amplitude Idamp* of target d-axis current Id* and an amplitude Iqamp* of target q-axis current Iq* in a two-phase rotating coordinate system (i.e., a d-q coordinate system) based on the amplitudes Iuamp*, Ivamp* and Iwamp* of the target currents of the respective phases and the electrical angle θe detected by the angle sensor 53.

A two-phase conversion unit 63 converts, for each control cycle, the U-phase, V-phase and W-phase currents in the three-phase fixed coordinate system into d-axis current Idr and q-axis current Iqr in the d-q coordinate system based on the detection values of the phase current sensor 51 and the electrical angle θe detected by the angle sensor 53.

A constant calculation unit 64 calculates, for each control cycle, the d-axis inductance Ld, the q-axis inductance Lq and the coupling inductance Lmf. Specifically, the constant calculation unit 64 calculates the d-axis inductance Ld based on map information, the d-axis current Idr calculated by the two-phase conversion unit 63, the field current Ifr detected by the field current sensor 52 and the electrical angle θe detected by the angle sensor 53; the map information associates the d-axis inductance Ld with the d-axis current Idr, the field current Ifr and the electrical angle θe. For example, the constant calculation unit 64 may calculate the d-axis inductance Ld such that the higher the d-axis current Id and/or the field current Ifr, the lower the calculated d-axis inductance Ld.

Moreover, the constant calculation unit 64 calculates the coupling inductance Lmf based on map information, the d-axis current Idr calculated by the two-phase conversion unit 63, the field current Ifr detected by the field current sensor 52 and the electrical angle θe detected by the angle sensor 53; the map information associates the coupling inductance Lmf with the d-axis current Idr, the field current Ifr and the electrical angle θe. For example, the constant calculation unit 64 may calculate the coupling inductance Lmf such that the higher the d-axis current Id and/or the field current Ifr, the lower the calculated coupling inductance Lmf.

Furthermore, the constant calculation unit 64 calculates the q-axis inductance Lq based on map information, the q-axis current Iqr calculated by the two-phase conversion unit 63 and the electrical angle θe detected by the angle sensor 53; the map information associates the q-axis inductance Lq with the q-axis current Iqr and the electrical angle θe. For example, the constant calculation unit 64 may calculate the q-axis inductance Lq such that the higher the q-axis current Iqr, the lower the calculated q-axis inductance Lq.

The initial field amplitude calculation unit 65 calculates, for each control cycle, an initial field amplitude Ifampini based on the amplitude Idamp* of the target d-axis current Id* calculated by the two-phase target amplitude calculation unit 62, the inductances Ld, Lq and Lmf calculated by the constant calculation unit 64, and the above equation (eq5); the initial field amplitude Ifampini is an initial value of the amplitudes of the target field current If*. That is, Ifampini = (Lq - Ld) / Lmf × Idamp*.

The target field calculation unit 66 calculates a target field current If* which varies at the same frequency as the target d-axis and target q-axis currents Id* and Iq* and whose amplitudes are equal to the initial field amplitude Ifampini calculated by the initial field amplitude calculation unit 65. The frequency of the target field current If* is set to a frequency that can satisfy the control responsiveness of the field current Ifr. For example, the frequency of the target field current If* may be set to a frequency of 5Hz or higher or to a frequency of 10Hz or higher. In addition, in the present embodiment, the target field calculation unit 66 corresponds to a "target value calculation unit" that calculates the target field current If*.

The field control unit 67 generates gate drive signals for the switches SH1, SL1, SH2 and SL2 of the field energization circuit 40 so as to feedback-control the detected field current Ifr to the target field current If* calculated by the target field calculation unit 66. Moreover, the field control unit 67 outputs the generated gate drive signals to drive circuits that drive the switches SH1, SL1, SH2 and SL2. Consequently, the field current Ifr is controlled to the sinusoidal target field current If*.

After start of the control of the field current Ifr by the field control unit 67, the target field calculation unit 66 acquires, for each control cycle, the d-axis current Idr calculated by the two-phase conversion unit 63 and adjusts the positive amplitude Ifp of the target field current If* based on the acquired d-axis current Idr.

Specifically, the target field calculation unit 66 calculates, based on the d-axis current Idr acquired each time, the negative amplitude Idamprm of the d-axis current Idr. Further, the target field calculation unit 66 calculates the absolute value of the difference between the calculated negative amplitude Idamprm of the d-axis current Idr and the amplitude Iqamp* of the target q-axis current Iq* calculated by the two-phase target amplitude calculation unit 62. When the calculated absolute value is determined to be greater than a current threshold value Ith, the target field calculation unit 66 adjusts the positive amplitude Ifp of the target field current If*. More specifically, in the adjustment process, when it is determined that the negative amplitude Idamprm of the d-axis current Idr is lower than the amplitude Iqamp* of the target q-axis current Iq*, the target field calculation unit 66 increases the positive amplitude Ifp of the target field current If*. For example, the target field calculation unit 66 may increase the positive amplitude Ifp of the target field current If* such that the larger the difference (Iqamp* - Idamprm), the larger the amount of increase in the positive amplitude Ifp. Moreover, in the adjustment process, when it is determined that the negative amplitude Idamprm of the d-axis current Idr is higher than the amplitude Iqamp* of the target q-axis current Iq*, the target field calculation unit 66 reduces the positive amplitude Ifp of the target field current If*. For example, the target field calculation unit 66 may reduce the positive amplitude Ifp of the target field current If* such that the larger the difference (Idamprm - Iqamp*), the larger the amount of reduction in the positive amplitude Ifp. The target field calculation unit 66 performs the adjustment process of the positive amplitude Ifp of the target field current If* each time it calculates the negative amplitude Idamprm of the d-axis current Idr, until the absolute value of the difference between the negative amplitude Idamprm of the d-axis current Idr and the amplitude Iqamp* of the target q-axis current Iq* becomes less than or equal to the current threshold value Ith.

After start of the control of the field current Ifr by the field control unit 67, the target field calculation unit 66 acquires, for each control cycle, the d-axis current Idr calculated by the two-phase conversion unit 63 and adjusts the negative amplitude Ifm of the target field current If* based on the acquired d-axis current Idr.

Specifically, the target field calculation unit 66 calculates, based on the d-axis current Idr acquired each time, the positive amplitude Idamprp of the d-axis current Idr. Further, the target field calculation unit 66 calculates the absolute value of the difference between the calculated positive amplitude Idamprp of the d-axis current Idr and the amplitude Iqamp* of the target q-axis current Iq* calculated by the two-phase target amplitude calculation unit 62. When the calculated absolute value is determined to be greater than the current threshold value Ith, the target field calculation unit 66 adjusts the negative amplitude Ifm of the target field current If*. More specifically, in the adjustment process, when it is determined that the positive amplitude Idamprp of the d-axis current Idr is lower than the amplitude Iqamp* of the target q-axis current Iq*, the target field calculation unit 66 increases the negative amplitude Ifm of the target field current If*. For example, the target field calculation unit 66 may increase the negative amplitude Ifm of the target field current If* such that the larger the difference (Iqamp* - Idamprp), the larger the amount of increase in the negative amplitude Ifm. Moreover, in the adjustment process, when it is determined that the positive amplitude Idamprp of the d-axis current Idr is higher than the amplitude Iqamp* of the target q-axis current Iq*, the target field calculation unit 66 reduces the negative amplitude Ifm of the target field current If*. For example, the target field calculation unit 66 may reduce the negative amplitude Ifm of the target field current If* such that the larger the difference (Idamprp - Iqamp*), the larger the amount of reduction in the negative amplitude Ifm. The target field calculation unit 66 performs the adjustment process of the negative amplitude Ifm of the target field current If* each time it calculates the positive amplitude Idamprp of the d-axis current Idr, until the absolute value of the difference between the positive amplitude Idamprp of the d-axis current Idr and the amplitude Iqamp* of the target q-axis current Iq* becomes less than or equal to the current threshold value Ith.

The target d-axis current calculation unit 68 calculates, for each control cycle, the target d-axis current Id* based on the inductances Ld, Lq and Lmf calculated by the constant calculation unit 64, the target field current If* calculated by the target field calculation unit 66, and the above equation (eq5). In the case of the amplitudes of the target field current If* having been adjusted by the target field calculation unit 66, the target d-axis current calculation unit 68 calculates the target d-axis current Id* using the target field current If* whose amplitudes have been adjusted. In addition, in the present embodiment, the target d-axis current calculation unit 68 also corresponds to the "target value calculation unit" that calculates the target d-axis current Id* as well.

The three-phase control unit 69 calculates, based on the amplitude Iqamp* of the target q-axis current Iq* calculated by the two-phase target amplitude calculation unit 62, a target q-axis current Iq* that is different in phase by 90° from the target d-axis current Id* and has the same amplitudes as the target d-axis current Id*. In addition, in the present embodiment, the three-phase control unit 69 also corresponds to the "target value calculation unit" that calculates the target q-axis current Iq* as well.

The three-phase control unit 69 also functions as an "armature control unit" that generates gate drive signals for the switches SUH, SUL, SVH, SVL, SWH and SWL of the inverter 20 so as to feedback-control the q-axis current Iqr calculated by the two-phase conversion unit 63 to the calculated target q-axis current Iq* and feedback-control the d-axis current Idr calculated by the two-phase conversion unit 63 to the target d-axis current Id* calculated by the target d-axis current calculation unit 68. In the process of generating the gate drive signals, the electrical angle θe and the power supply voltage Vdc detected by the voltage sensor 50 are used. Moreover, the three-phase control unit 69 outputs the generated gate drive signals to drive circuits that drive the switches SUH, SUL, SVH, SVL, SWH and SWL of the inverter 20.

Consequently, the d-axis current Idr is controlled to the sinusoidal target d-axis current Id* and the q-axis current Iqr is controlled to the sinusoidal target q-axis current Iq*.

FIG. 9 is a flowchart illustrating steps of a temperature raising control process performed by the control apparatus 60 according to the present embodiment. This control process may be performed, for example, upon determination by the control apparatus 60 that charging of the storage battery 10 by an external charger has been started.

In step S10, it is determined whether there is a request to raise the temperature of the storage battery 10. In the present embodiment, if the temperature Tr of the storage battery 10 detected by the battery temperature sensor 54 is lower than the target temperature T*, then it is determined that there is a temperature-raising request. In addition, in the present embodiment, step S10 corresponds to a "determination unit".

If it is determined in step S10 that there is a temperature-raising request, the control process proceeds to step S11, in which a process for determining the target field current If* is performed. Hereinafter, the target field current If* determination process will be described with reference to FIG. 10.

In step S20, the target amount of heat Q* is acquired from the upper control apparatus 80. For example, the host control apparatus 80 may calculate the target amount of heat Q* such that the larger the value obtained by subtracting the temperature Tr of the storage battery 10 from the target temperature T*, the larger the calculated target amount of heat Q*.

In step S21, the three-phase target amplitude calculation unit 61 calculates, based on the target amount of heat Q* acquired in step S20, the amplitude Iuamp* of the target U-phase current, the amplitude Ivamp* of the target V-phase current and the amplitude Iwamp* of the target W-phase current.

In step S22, the two-phase target amplitude calculation unit 62 calculates the amplitude Idamp* of the target d-axis current Id* and the amplitude Iqamp* of the target q-axis current Iq* based on the amplitudes Iuamp*, Ivamp* and Iwamp* of the target currents of the respective phases calculated in step S21 and the electrical angle θe.

In step S23, the two-phase conversion unit 63 calculates the d-axis current Idr and the q-axis current Iqr based on the detection values of the phase current sensor 51 and the electrical angle θe.

In step S24, the constant calculation unit 64 calculates the d-axis inductance Ld based on map information, the d-axis current Idr calculated in step S23, the field current Ifr and the electrical angle θe; the map information associates the d-axis inductance Ld with the d-axis current Idr, the field current Ifr and the electrical angle θe.

Moreover, in step S24, the constant calculation unit 64 also calculates the coupling inductance Lmf based on map information, the d-axis current Idr calculated in step S23, the field current Ifr and the electrical angle θe; the map information associates the coupling inductance Lmf with the d-axis current Idr, the field current Ifr and the electrical angle θe.

Furthermore, in step S24, the constant calculation unit 64 also calculates the q-axis inductance Lq based on map information, the q-axis current Iqr calculated in step S23 and the electrical angle θe; the map information associates the q-axis inductance Lq with the q-axis current Iqr and the electrical angle θe.

In step S25, the initial field amplitude calculation unit 65 calculates the initial field amplitude Ifampini based on the amplitude Idamp* of the target d-axis current Id* calculated in step S22, the inductances Ld, Lq and Lmf calculated in step S24, and the above equation (eq5).

In step S26, the target field calculation unit 66 calculates the target field current If* based on the initial field amplitude Ifampini calculated in step S25.

In step S27, the two-phase conversion unit 63 calculates the d-axis current Idr and the q-axis current Iqr in the same manner as in step S23. In step S28, the constant calculation unit 64 calculates the inductances Ld, Lq and Lmf in the same manner as in step S24.

In step S29, the target d-axis current calculation unit 68 calculates the target d-axis current Id* based on the target field current If* calculated in step S26, the inductances Ld, Lq and Lmf calculated in step S28, and the above equation (eq5).

In step S30, the three-phase control unit 69 calculates, based on the amplitude Iqamp* of the target q-axis current Iq* calculated in step S22, a target q-axis current Iq* that is different in phase by 90° from the target d-axis current Id* calculated in step S29 and has the same amplitudes as the target d-axis current Id*.

In step S31, the field control unit 67 performs switching control of the switches SH1, SL1, SH2 and SL2 of the field energization circuit 40 so as to feedback-control the field current Ifr to the target field current If* calculated in step S26.

In step S32, the three-phase control unit 69 performs switching control of the switches SUH, SUL, SVH, SVL, SWH and SWL of the inverter 20 so as to feedback-control the d-axis current Idr calculated in step S27 to the target d-axis current Id* calculated in step S29 and feedback-control the q-axis current Iqr calculated in step S27 to the target q-axis current Iq* calculated in step S30.

In step S33, the target field calculation unit 66 calculates the absolute value of the difference between the positive amplitude Idamprp of the d-axis current Idr and the amplitude Iqamp* of the target q-axis current Iq* calculated in step S22. If the calculated absolute value is determined to be greater than the current threshold value Ith, the process proceeds to step S34 in which the target field calculation unit 66 adjusts the negative amplitude Ifm of the target field current If*. Moreover, in step S33, the target field calculation unit 66 also calculates the absolute value of the difference between the negative amplitude Idamprm of the d-axis current Idr and the amplitude Iqamp* of the target q-axis current Iq* calculated in step S22. If the calculated absolute value is determined to be greater than the current threshold value Ith, the process proceeds to step S34 in which the target field calculation unit 66 adjusts the positive amplitude Ifp of the target field current If*. After step S34, in step S26, the target field calculation unit 66 calculates the target field current If* that has the adjusted positive amplitude Ifp and negative amplitude Ifm.

On the other hand, if it is determined in step S33 that both the absolute value of the difference between the positive amplitude Idamprp of the d-axis current Idr and the amplitude Iqamp* of the target q-axis current Iq* and the absolute value of the difference between the negative amplitude Idamprm of the d-axis current Idr and the amplitude Iqamp* of the target q-axis current Iq* are less than or equal to the current threshold value Ith, the target field calculation unit 66 finalizes the positive and negative amplitudes Ifp and Ifm of the target field current If*. Then, the process proceeds to step S12 in FIG. 9.

In step S12, the field control unit 67 performs switching control of the switches SH1, SL1, SH2 and SL2 of the field energization circuit 40 so as to feedback-control the field current Ifr to the sinusoidal target field current If* whose amplitudes have been finalized.

Moreover, in step S12, the three-phase control unit 69 performs switching control of the switches SUH, SUL, SVH, SVL, SWH and SWL of the inverter 20 so as to feedback-control the d-axis and q-axis currents Idr and Iqr respectively to the sinusoidal target d-axis and target q-axis currents Id* and Iq*. The target d-axis current Id* used in the feedback control is calculated by the target d-axis current calculation unit 68 based on the target field current If* whose amplitudes have been finalized and the inductances Ld, Lq and Lmf calculated by the constant calculation unit 64. In addition, the target d-axis current Id* includes harmonic components due to the inductances Ld, Lq and Lmf. However, the inductances of the armature windings are very low compared to the inductance of the field winding 32; therefore, although the target d-axis current Id* includes harmonic components, it is still possible to feed-back control the d-axis current Idr to the target d-axis current Id*.

In step S13, it is determined whether the temperature Tobj of the object to be heated has reached the target temperature T*. In the present embodiment, as described above, the object to be heated is the storage battery 10; therefore, the temperature Tobj of the object to be heated is the temperature Tr of the storage battery 10.

If it is determined in step S13 that the temperature Tr of the storage battery 10 is lower than the target temperature T*, the switching control in step S12 is continued. In contrast, if it is determined in step S13 that the temperature Tr of the storage battery 10 has reached the target temperature T*, the temperature raising control is terminated.

In addition, during the execution of the temperature raising control, the rotational driving of the fan 403 may be stopped in order to suppress decrease in the temperature of the cooling water flowing through the circulation path 400.

As described above, in the present embodiment, the positive and negative amplitudes Ifp and Ifm of the sinusoidal target field current If* are individually adjusted so that the amplitudes of the three phase currents become equal to each other. In this case, it is unnecessary to make the field current Ifr follow harmonic components; therefore, the amplitudes of the three phase currents can be made equal to each other even when the control responsiveness of the field current Ifr is low. Consequently, it becomes possible to equalize the amounts of heat generated by the switches SUH, SUL, SVH, SVL, SWH and SWL of the inverter 20; thus, it becomes possible to suitably increase the amount of heat generated during the temperature raising control. As a result, it becomes possible to quickly raise the temperature of the storage battery 10, thereby shortening the charging time of the storage battery 10 by an external charger. At the same time, it also becomes possible to keep the rotor 31 in the rotation-stopped state, thereby preventing the user of the vehicle from feeling uncomfortable during the external charging of the storage battery 10.

[Modifications of First Embodiment]

In the constant calculation unit 64, the target d-axis and target q-axis currents Id* and Iq* calculated, for example, before one control cycle may be used instead of the d-axis and q-axis currents Idr and Iqr. Moreover, in the constant calculation unit 64, the target field current If* calculated, for example, before one control cycle may be used instead of the field current Ifr.

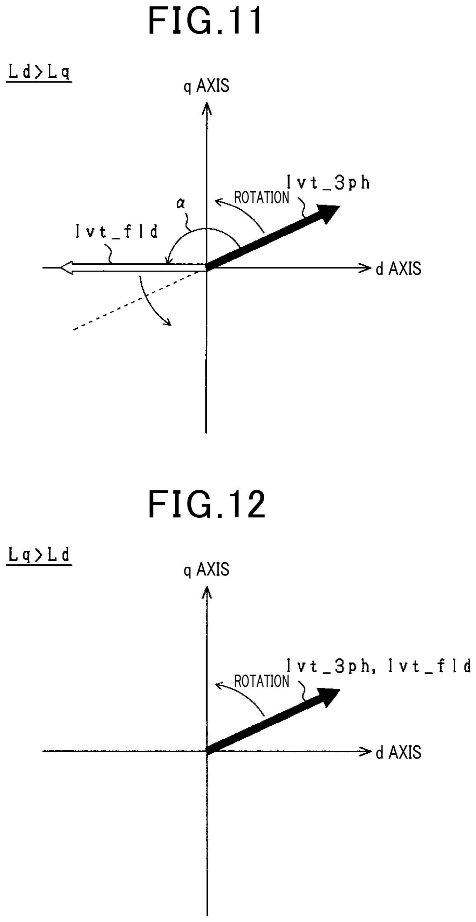

The phase difference $\alpha$ between the armature current vector Ivt_3ph and the field current vector Ivt_fld during the temperature raising control is not limited to 180°, but may alternatively be an angle as shown in FIG. 11 provided that the field current vector Ivt_fld has a component that reduces the reluctance torque of the rotating electric machine 30. The phase difference $\alpha$ shown in FIG. 11 is defined to be positive when the field current vector Ivt_fld advances clockwise with respect to the armature current vector Ivt_3ph. The phase difference $\alpha$ may be set, for example, to 90° < $\alpha$ < 270°, preferably to 150° ≤ $\alpha$ ≤ 210°, and more preferably to 170° ≤ $\alpha$ ≤ 190°, provided that the torque Trq generated by the rotating electric machine 30 is lower than the torque threshold value Trqth.

The rotating electric machine 30 may alternatively have a reverse saliency such that the q-axis inductance Lq is higher than the d-axis inductance Ld. In this case, during the temperature raising control, based on the above equation (eq5), switching control of the inverter 20 and the field energization circuit 40 may be performed so as to make the phase difference $\alpha$ between the field current vector Ivt_fld and the armature current vector Ivt_3ph become 0° as shown in FIG. 12. Moreover, in this case, when it is determined that the negative amplitude Idamprm of the d-axis current Idr is lower than the amplitude Iqamp* of the target q-axis current Iq*, the target field calculation unit 66 may increase, for example, the negative amplitude Ifm of the target field current If* instead of the positive amplitude Ifp of the target field current If*. In contrast, when it is determined that the negative amplitude Idamprm of the d-axis current Idr is higher than the amplitude Iqamp* of the target q-axis current Iq*, the target field calculation unit 66 may reduce, for example, the negative amplitude Ifm of the target field current If*. Furthermore, in this case, when it is determined that the positive amplitude Idamprp of the d-axis current Idr is lower than the amplitude Iqamp* of the target q-axis current Iq*, the target field calculation unit 66 may increase, for example, the positive amplitude Ifp of the target field current If* instead of the negative amplitude Ifm of the target field current If*. In contrast, when it is determined that the positive amplitude Idamprp of the d-axis current Idr is higher than the amplitude Iqamp* of the target q-axis current Iq*, the target field calculation unit 66 may reduce, for example, the positive amplitude Ifp of the target field current If*.

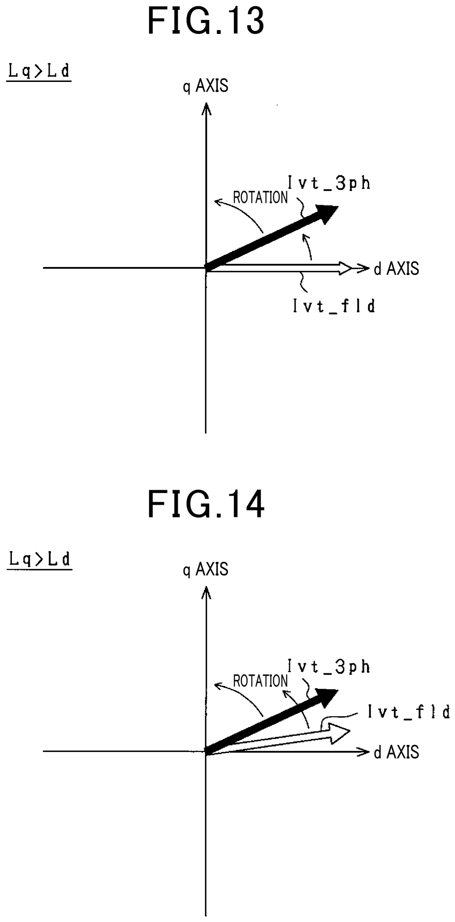

In addition, in the case of the rotating electric machine 30 having the reverse saliency, the phase difference $\alpha$ is not limited to 0°, but may may alternatively be an angle as shown in FIG. 13 or an angle as shown in FIG. 14 provided that the field current vector Ivt_fld has a component that reduces the reluctance torque of the rotating electric machine 30. Specifically, the phase difference $\alpha$ may be set, for example, to -90° < $\alpha$ < 90°, preferably to -30° ≤ $\alpha$ ≤ 30°, and more preferably to -10° ≤ $\alpha$ ≤ 10°, provided that the torque Trq generated by the rotating electric machine 30 is lower than the torque threshold value Trqth. It should be noted that FIGS. 13 and 14 illustrate examples where the phase difference $\alpha$ is negative.

The control apparatus 60 may vary the torque threshold value Trqth. For example, when it is determined that a parking brake of the vehicle is in an operating state, the control apparatus 60 may set the torque threshold value Trqth to a value greater than that when the parking brake is not in the operating state.

The control apparatus 60 may further include an acquisition unit that acquires the temperature of a road surface on which the vehicle travels, and may change the torque threshold value Trqth based on the acquired temperature of the road surface. For example, the control apparatus 60 may set the torque threshold value Trqth using map information that associates the torque threshold value Trqth with the temperature of the road surface.

During the execution of the temperature raising control, the control apparatus 60 may apply braking torque to the wheels of the vehicle using a mechanical brake apparatus provided in the vehicle.

[Second Embodiment]

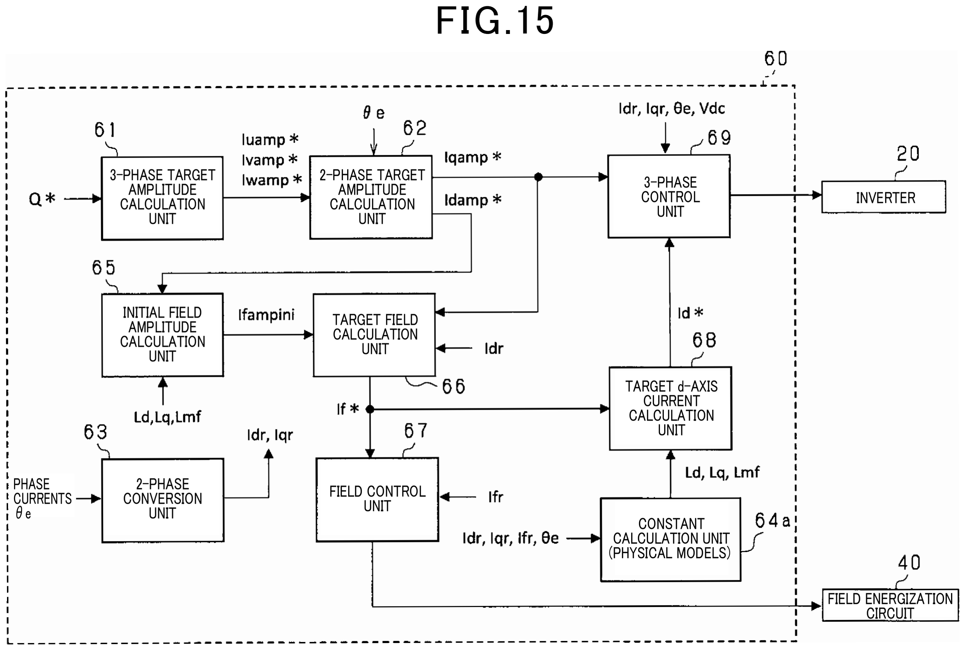

Hereinafter, a second embodiment will be described with reference to the drawings, focusing on the differences thereof from the first embodiment. In the second embodiment, as shown in FIG. 15, a constant calculation unit 64a calculates the inductances Ld, Lq and Lmf based on physical models instead of the map information used in the first embodiment.

Specifically, in the present embodiment, the constant calculation unit 64a calculates the d-axis inductance Ld and the coupling inductance Lmf based on a physical model of the d-axis magnetic circuit; the d-axis current Idr, the field current Ifr and the electrical angle θe are inputs to the physical model, whereas the d-axis inductance Ld and the coupling inductance Lmf are outputs from the physical model. Moreover, the constant calculation unit 64a calculates the q-axis inductance Lq based on a physical model of the q-axis magnetic circuit; the q-axis current Iqr and the electrical angle θe are inputs to the physical model, whereas the q-axis inductance Lq is an output from the physical model.

[Third Embodiment]

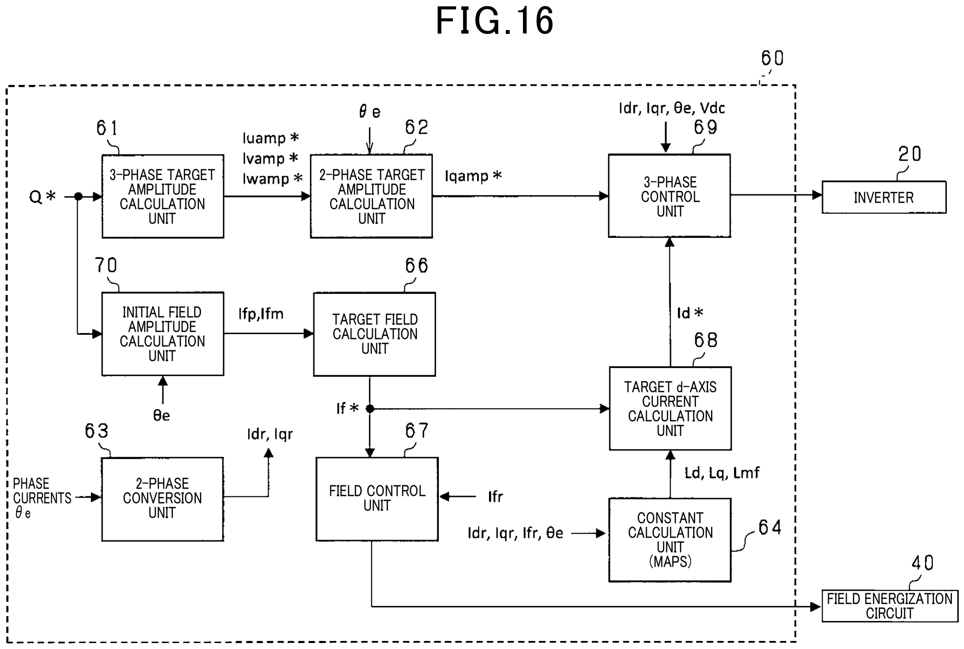

Hereinafter, a third embodiment will be described with reference to the drawings, focusing on the differences thereof from the first embodiment. In the third embodiment, the method of calculating the target field current If* in the temperature raising control is changed compared to that in the first embodiment. FIG. 16 is a block diagram illustrating temperature raising control according to the third embodiment. In the present embodiment, the two-phase target amplitude calculation unit 62 does not calculate the amplitude Idamp* of the target d-axis current Id*.

In the present embodiment, an initial field amplitude calculation unit 70 calculates, for each control cycle, the positive and negative amplitudes Ifp and Ifm of the target field current If* based on the target amount of heat Q* acquired from the host control apparatus 80 and the electrical angle θe. Specifically, the initial field amplitude calculation unit 70 calculates the positive and negative amplitudes Ifp and Ifm based on map information, the target amount of heat Q* acquired from the host control apparatus 80 and the electrical angle θe; the map information associates the positive and negative amplitudes Ifp and Ifm with the target amount of heat Q* and the electrical angle θe. For example, the initial field amplitude calculation unit 70 may calculate the positive and negative amplitudes Ifp and Ifm such that the larger the target amount of heat Q*, the higher the calculated positive and negative amplitudes Ifp and Ifm. As shown in the above equation (eq5), the field current is related to the d-axis current via the inductances Ld, Lq and Lmf. Moreover, the d-axis current, which correlates with the d-axis inductance Ld and the coupling inductance Lmf, also correlates with the target amount of heat Q*. Similarly, the q-axis current, which correlates with the q-axis inductance Lq, also correlates with the target amount of heat Q*. Furthermore, each of the inductances Ld, Lq and Lmf correlates with the electrical angle. Therefore, the map information can be determined as information reflecting the relationship between the target amount of heat Q*, the electrical angle θe, and the positive and negative amplitudes Ifp and Ifm.

The target field calculation unit 66 calculates a target field current If* that has the positive and negative amplitudes Ifp and Ifm calculated by the initial field amplitude calculation unit 70 and varies at the same frequency as the target d-axis and target q-axis currents Id* and Iq*. After this calculation process, in the present embodiment, the positive and negative amplitudes Ifp and Ifm of the target field current If* are kept unchanged. Consequently, the calculation load on the control apparatus 60 can be reduced.

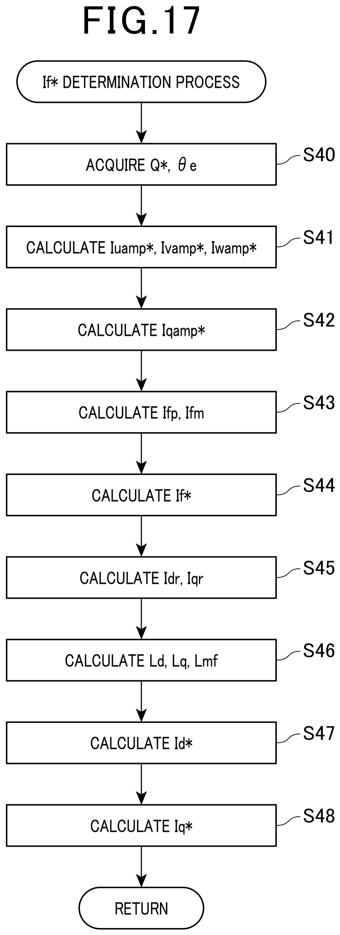

FIG. 17 illustrates steps of a target field current If* determination process performed by the control apparatus 60 according to the present embodiment.

In step S40, the target amount of heat Q* is acquired from the host control apparatus 80.

In step S41, the three-phase target amplitude calculation unit 61 calculates, based on the target amount of heat Q* acquired in step S40, the amplitude Iuamp* of the target U-phase current, the amplitude Ivamp* of the target V-phase current and the amplitude Iwamp* of the target W-phase current.

In step S42, the two-phase target amplitude calculation unit 62 calculates the amplitude Iqamp* of the target q-axis current Iq* based on the amplitudes Iuamp*, Ivamp* and Iwamp* of the target currents of the respective phases calculated in step S41 and the electrical angle θe.

In step S43, the initial field amplitude calculation unit 70 calculates the positive and negative amplitudes Ifp and Ifm of the target field current If* based on the target amount of heat Q* and the electrical angle θe, both of which are acquired in step S40, and the map information that associates the positive and negative amplitudes Ifp and Ifm with the target amount of heat Q* and the electrical angle θe.

In step S44, the target field calculation unit 66 calculates the target field current If* based on the positive and negative amplitudes Ifp and Ifm calculated in step S43.

In step S45, the two-phase conversion unit 63 calculates the d-axis current Idr and the q-axis current Iqr based on the detection values of the phase current sensor 51 and the electrical angle θe.

In step S46, the constant calculation unit 64 calculates the d-axis inductance Ld based on map information, the d-axis current Idr calculated in step S45, the field current Ifr and the electrical angle θe; the map information associates the d-axis inductance Ld with the d-axis current Idr, the field current Ifr and the electrical angle θe. Moreover, in step S46, the constant calculation unit 64 also calculates the coupling inductance Lmf based on map information, the d-axis current Idr calculated in step S45, the field current Ifr and the electrical angle θe; the map information associates the coupling inductance Lmf with the d-axis current Idr, the field current Ifr and the electrical angle θe.

Furthermore, in step S46, the constant calculation unit 64 also calculates the q-axis inductance Lq based on map information, the q-axis current Iqr calculated in step S45 and the electrical angle θe; the map information associates the q-axis inductance Lq with the q-axis current Iqr and the electrical angle θe.

In step S47, the target d-axis current calculation unit 68 calculates the target d-axis current Id* based on the target field current If* calculated in step S44, the inductances Ld, Lq and Lmf calculated in step S46, and the above equation (eq5).

In step S48, the three-phase control unit 69 calculates, based on the amplitude Iqamp* of the target q-axis current Iq* calculated in step S42, a target q-axis current Iq* that is different in phase by 90° from the target d-axis current Id* calculated in step S47 and has the same amplitudes as the target d-axis current Id*. Then, the process proceeds to step S12 in FIG. 9.

According to the present embodiment, after the calculation of the positive and negative amplitudes Ifp and Ifm of the target field current If* in step S43, it is unnecessary to perform an adjustment process of the amplitudes Ifp and Ifm. Consequently, the calculation load on the control apparatus 60 during the temperature raising control can be reduced.

[Modification of Third Embodiment]

The electrical angle θe may not be used in the initial field amplitude calculation unit 70. In this case, the initial field amplitude calculation unit 70 may calculate the positive and negative amplitudes Ifp and Ifm of the target field current If* based on the target amount of heat Q* acquired from the host control apparatus 80 and map information that associates the positive and negative amplitudes Ifp and Ifm with the target amount of heat Q*.

[Fourth Embodiment]

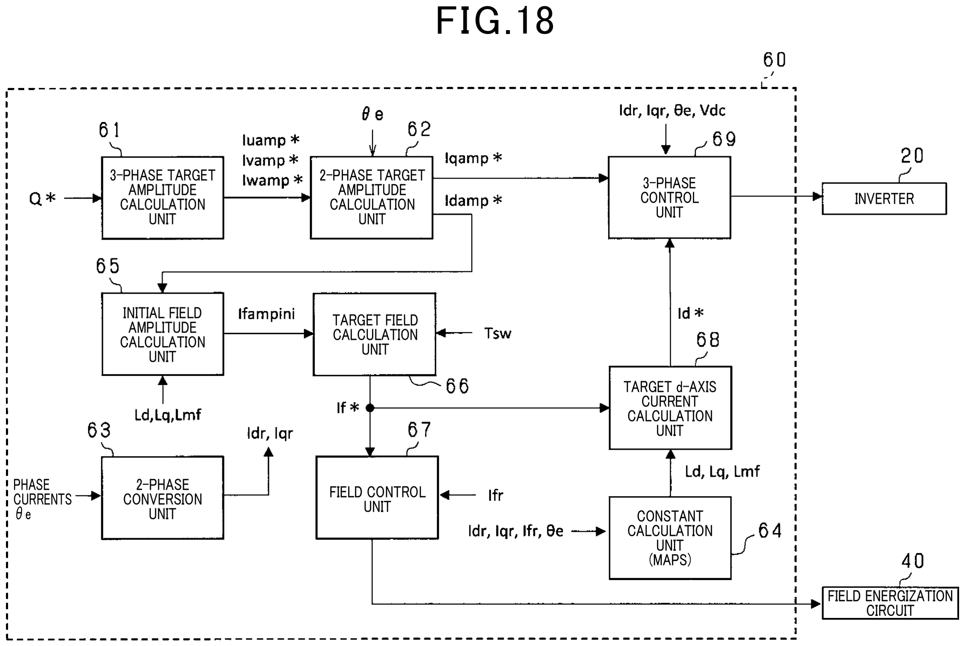

Hereinafter, a fourth embodiment will be described with reference to the drawings, focusing on the differences thereof from the first embodiment. In the fourth embodiment, the target field calculation unit 66 adjusts the positive and negative amplitudes Ifp and Ifm of the target field current If* based on the detection values of the switch temperature sensor 55 instead of the d-axis current Idr. FIG. 18 is a block diagram illustrating temperature raising control according to the fourth embodiment.

The target field calculation unit 66 calculates a target field current If* which varies at the same frequency as the target d-axis and target q-axis currents Id* and Iq* and whose amplitudes are equal to the initial field amplitude Ifampini calculated by the initial field amplitude calculation unit 65. After start of the control of the field current Ifr by the field control unit 67, the target field calculation unit 66 acquires, for each control cycle, the temperature detection values Tsw of the switch temperature sensor 55 and adjusts the positive and negative amplitudes Ifp and Ifm of the target field current If* based on the acquired temperature detection value Tsw. Hereinafter, an example of this adjustment method will be described.

The target field calculation unit 66 calculates an average value Tave of the detected temperatures of the switches SUH, SUL, SVH, SVL, SWH and SWL of the inverter 20. Moreover, the target field calculation unit 66 calculates a maximum deviation temperature Tb, which is the temperature that deviates most from the average value Tave among the detected temperatures of the switches SUH, SUL, SVH, SVL, SWH and SWL of the inverter 20. Then, the target field calculation unit 66 adjusts the positive and negative amplitudes Ifp and Ifm of the target field current If* so as to make the maximum deviation temperature Tb approach the average value Tave.

More specifically, in the present embodiment, the target field calculation unit 66 adjusts the positive and negative amplitudes Ifp and Ifm of the target field current If* based on the temperature detection values Tsw of the switch temperature sensor 55, until the absolute value of the difference between the maximum deviation temperature Tb and the average value Tave becomes less than or equal to a temperature threshold value Tth.

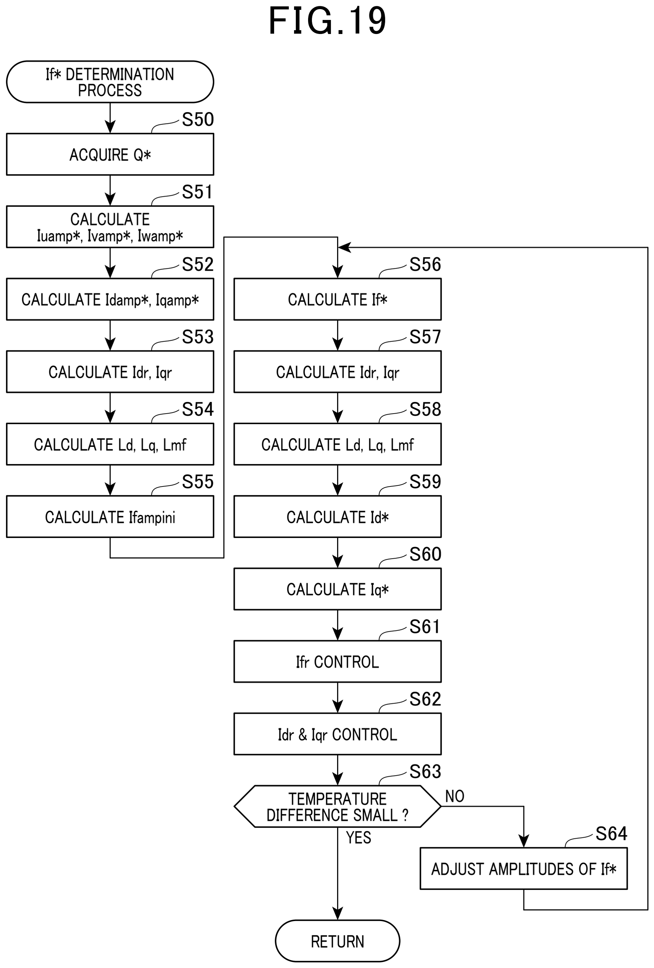

FIG. 19 illustrates steps of a target field current If* determination process performed by the control apparatus 60 according to the present embodiment. It should be noted that: steps S50 to S62 of the process shown in FIG. 19 are respectively identical to steps S20 to S32 of the process shown in FIG. 10; therefore, explanation of these steps will be omitted hereinafter.

In step S63, the average value Tave and the maximum deviation temperature Tb are calculated based on the temperature detection values Tsw of the switch temperature sensor 55. Then, if it is determined that the absolute value of the difference between the maximum deviation temperature Tb and the average value Tave is greater than the temperature threshold value Tth, the process proceeds to step S64. In step S64, the positive and negative amplitudes Ifp and Ifm of the target field current If* are adjusted.

According to the present embodiment, it is possible to achieve advantageous effects similar to those achievable according to the first embodiment.

[Other Embodiments]

The above-described embodiments may be modified and implemented as follows.

In the fourth embodiment, the target field calculation unit 66 may use the temperature detection values of the cooling water temperature sensor 56 instead of the temperature detection values Tsw of the switch temperature sensor 55. There is a correlation between the temperature detection values of the cooling water temperature sensor 56 and the temperature detection values Tsw of the switch temperature sensor 55.

The physical models described in the second embodiment may be applied to the third and fourth embodiments.

In the above-described embodiments, the rotating electric machine is not limited to one that includes only a field winding to form field poles, but may alternatively be one that includes, in addition to a field winding, permanent magnets to form field poles. In this case, let $\varphi m$ be the magnetic flux generated by the permanent magnets, then the following equation (eq6) is satisfied instead of the above equation (eq1).

$$\mathrm{Trq} = \mathrm{TM} + \mathrm{TR} = \mathrm{P} \cdot (\varphi f + \varphi m) \cdot \mathrm{Iq} + \mathrm{P} \cdot (\mathrm{Ld} - \mathrm{Lq}) \cdot \mathrm{Id} \cdot \mathrm{Iq} \qquad (\mathrm{eq6})$$

Setting Trq to zero in the above equation (eq6), the following equation (eq7) can be derived.

$$\varphi f = -(\mathrm{Ld} - \mathrm{Lq}) \cdot \mathrm{Id} - \varphi m \qquad (\mathrm{eq7})$$

Further, the following equation (eq8) can be derived from the above equations (eq2) and (eq7).

$$\mathrm{If} \propto -(\mathrm{Ld} - \mathrm{Lq}) \cdot \mathrm{Id} / \mathrm{Nf} - \varphi m / \mathrm{Nf} \qquad (\mathrm{eq8})$$

According to the above equation (eq8), the target field current If* is set to field current that is obtained by superimposing a DC component corresponding to (-φm/Nf) on the AC field current If described in the first embodiment, thereby making it possible to keep the rotor 31 in a rotation-stopped state.

The rotating electric machine is not limited to one in which a field winding is provided on a rotor, but may alternatively be one in which a field winding is provided on a stator, such as a hybrid excited flux switching motor (HEFSM).

The rotating electric machine is not limited to a synchronous machine, but may alternatively be an asynchronous machine such as an induction machine.

The rotating electric machine is not limited to a radial type in which a rotor and a stator are opposed to each other in a radial direction, but may alternatively be an axial type in which a rotor and a stator are opposed to each other in an axial direction of a rotating shaft.

The rotating electric machine is not limited to one in which armature windings are star-connected, but may alternatively be one in which armature windings are delta-connected. Moreover, the number of phases of the rotating electric machine and the inverter is not limited to three, but may alternatively be two, or four or more.

The object to be heated by the temperature raising control may alternatively be, for example, the cooling water flowing through the circulation path 400. In this case, if the vehicle is equipped with an air conditioning system that utilizes the cooling water as a heat source for heating the interior of the vehicle, the temperature of the heat source can be quickly increased by the temperature raising control.

The heat transfer unit is not limited to one that uses cooling water as a cooling fluid, but may alternatively be, for example, an air-cooled type that uses gas (air) as a cooling fluid, or a heat sink that is made of metal. Moreover, in the case of a heat sink being used as the heat transfer unit, an electric power converter such as an inverter and a storage battery may be provided on the heat sink.

The switches of the inverter are not limited to N-channel MOSFETs, but may alternatively be, for example, IGBTs. Moreover, in this case, each of the IGBTs may have a freewheel diode connected in antiparallel thereto.

The power storage unit connected to an electric power converter such as an inverter is not limited to a storage battery, but may alternatively be, for example, a high-capacity electric double-layer capacitor, or a unit that includes both a storage battery and an electric double-layer capacitor.

The object in which the control apparatus is installed is not limited to a vehicle, but may alternatively be, for example, an aircraft or a ship. Moreover, the object in which the control apparatus is installed is not limited to a mobile object, but may alternatively be a stationary object.

The control units and the control methods described in the present disclosure may be realized by a dedicated computer that includes a processor, which is programmed to perform one or more functions embodied by a computer program, and a memory. As an alternative, the control units and the control methods described in the present disclosure may be realized by a dedicated computer that includes a processor configured with one or more dedicated hardware logic circuits. As another alternative, the control units and the control methods described in the present disclosure may be realized by one or more dedicated computers configured with a combination of a processor programmed to perform one or more functions, a memory and a processor configured with one or more dedicated hardware logic circuits. In addition, the computer program may be stored as computer-executable instructions in a computer-readable non-transitory tangible recording medium.

Hereinafter, characteristic configurations derived from the above-described embodiments will be described.

[First Configuration]

A control apparatus (60) applicable to a system,
the system comprising:

a power storage unit (10);
a rotating electric machine (30) having armature windings (34U to 34W) respectively of a plurality of phases and a field winding (32);
a first electric power converter (20) electrically connecting the power storage unit with the armature windings and having upper-arm and lower-arm switches (SUH to SWL) for each phase; and
a second electric power converter (40) electrically connecting the power storage unit with the field winding,
the control apparatus comprising:

a target value calculation unit configured to calculate a target field current (If*) to be supplied to the field winding and target d-axis and target q-axis currents (Id*, Iq*) to be supplied to the armature windings;
an armature control unit configured to perform switching control of the upper-arm and lower-arm switches for each phase so as to control d-axis current (Idr) flowing through the armature windings to the calculated target d-axis current and control q-axis current (Iqr) flowing through the armature windings to the calculated target q-axis current; and

a field control unit configured to perform switching control of the second electric power converter so as to control field current (Ifr) flowing through the field winding to the calculated target field current,
wherein
the target value calculation unit is further configured to:

calculate the target field current that is sinusoidal; and
calculate, based on the calculated target field current and inductances (Ld, Lq, Lmf) of the rotating electric machine, the target d-axis current so as to satisfy both a requirement of making torque generated by the rotating electric machine a torque with which a rotor of the rotating electric machine can be kept in a rotation-stopped state and a requirement that the vector of the field current flowing through the field winding in a d-q coordinate system have a component that reduces reluctance torque of the rotating electric machine.

[Second Configuration]

The control apparatus according to the first configuration, wherein the target value calculation unit is further configured to individually calculate a positive amplitude (Ifp) and a negative amplitude (Ifm) of the target field current so that amplitudes of phase currents (Iu, Iv, Iw) flowing respectively through the armature windings become equal to each other.

[Third Configuration]

The control apparatus according to the second configuration, wherein the target value calculation unit is further configured to:

calculate the positive amplitude and the negative amplitude based on a target amount of heat (Q*) which is a target value for the amount of heat generated by the switching control of the upper-arm and lower-arm switches for each phase; and
calculate the sinusoidal target field current based on the calculated positive and negative amplitudes.

[Fourth Configuration]

The control apparatus according to the third configuration, wherein the target value calculation unit is further configured to calculate the positive amplitude and the negative amplitude based on an electrical angle of the rotor as well as on the target amount of heat.

[Fifth Configuration]

The control apparatus according to the second configuration, wherein the target value calculation unit is further configured to:

calculate an initial value of the target field current based on the inductances of the rotating electric machine; and
adjust, after the calculation of the initial value, the positive amplitude and the negative amplitude at the initial value so as to make an amplitude of the d-axis current equal to an amplitude of the q-axis current.

[Sixth Configuration]

The control apparatus according to the fifth configuration, wherein the target value calculation unit is further configured to:

calculate the d-axis current flowing through the armature windings based on detection values of a current sensor (51) that detects the phase currents flowing respectively through the armature windings; and
adjust the positive amplitude and the negative amplitude based on the calculated d-axis current.

[Seventh Configuration]

The control apparatus according to the second configuration, wherein the target value calculation unit is further configured to:

calculate an initial value of the target field current based on the inductances of the rotating electric machine; and

adjust, after the calculation of the initial value, the positive amplitude and the negative amplitude at the initial value so as to make temperatures of the upper-arm and lower-arm switches for each phase approach each other.

[Eighth Configuration]

The control apparatus according to the seventh configuration, wherein the target value calculation unit is further configured to adjust the positive amplitude and the negative amplitude based on detection values of a temperature sensor that detects the temperatures of the upper-arm and lower-arm switches for each phase or detects correlation values of the temperatures.

[Ninth Configuration]

The control apparatus according to any one of the first to eighth configurations, wherein the target value calculation unit is further configured to calculate the inductances of the rotating electric machine based on map information about the inductances or based on physical models whose outputs are the inductances.

[Tenth Configuration]

The control apparatus according to any one of the first to ninth configurations, wherein:

the system further comprises a heat transfer unit (400, 401) that transfers heat generated in the first electric power converter to an object (10) to be heated;
the control apparatus further comprises a determination unit that is configured to determine whether there is a request to raise the temperature of the object to be heated; and
the target value calculation unit is further configured to calculate the target field current and the target d-axis and target q-axis currents when it is determined that there is a request to raise the temperature of the object to be heated.

[Eleventh Configuration]

The control apparatus according to any one of the first to tenth configurations, wherein:

the rotating electric machine has a characteristic such that its d-axis inductance is higher than its q-axis inductance; and
the target value calculation unit is further configured to calculate the target d-axis current so as to satisfy a requirement that the vector of the field current flowing through the field winding in the d-q coordinate system have a component that is different in phase by 180° from the vector of armature current flowing through the armature windings in the d-q coordinate system.

[Twelfth Configuration]

The control apparatus according to any one of the first to tenth configurations, wherein:

the rotating electric machine has a characteristic such that its q-axis inductance is higher than its d-axis inductance; and
the target value calculation unit is further configured to calculate the target d-axis current so as to satisfy a requirement that the vector of the field current flowing through the field winding in the d-q coordinate system have a component whose phase is the same as that of the vector of armature current flowing through the armature windings in the d-q coordinate system.

[Thirteenth Configuration]

The control apparatus according to any one of the first to twelfth configurations, wherein the second electric power converter comprises two pairs of serially-connected upper-arm and lower-arm switches (SH1, SL1, SH2, SL2) each of which allows flow of electric current in both directions.

While the present disclosure has been described pursuant to the above-described embodiments, it should be appreciated that the present disclosure is not limited to these embodiments and the structures. Instead, the present disclosure encompasses various modifications and changes within equivalent ranges. In addition, various combinations and modes are also included in the category and the scope of technical idea of the present disclosure.

**Claims**

1.  A control apparatus (60) applicable to a system,
    the system comprising:

    a power storage unit (10);
    a rotating electric machine (30) having armature windings (34U to 34W) respectively of a plurality of phases and a field winding (32);
    a first electric power converter (20) electrically connecting the power storage unit with the armature windings and having upper-arm and lower-arm switches (SUH to SWL) for each phase; and
    a second electric power converter (40) electrically connecting the power storage unit with the field winding,
    the control apparatus comprising:

    a target value calculation unit configured to calculate a target field current (If*) to be supplied to the field winding and target d-axis and target q-axis currents (Id*, Iq*) to be supplied to the armature windings;
    an armature control unit configured to perform switching control of the upper-arm and lower-arm switches for each phase so as to control d-axis current (Idr) flowing through the armature windings to the calculated target d-axis current and control q-axis current (Iqr) flowing through the armature windings to the calculated target q-axis current; and
    a field control unit configured to perform switching control of the second electric power converter so as to control field current (Ifr) flowing through the field winding to the calculated target field current,
    wherein
    the target value calculation unit is further configured to:

    calculate the target field current that is sinusoidal; and
    calculate, based on the calculated target field current and inductances (Ld, Lq, Lmf) of the rotating electric machine, the target d-axis current so as to satisfy both a requirement of making torque generated by the rotating electric machine a torque with which a rotor of the rotating electric machine can be kept in a rotation-stopped state and a requirement that the vector of the field current flowing through the field winding in a d-q coordinate system have a component that reduces reluctance torque of the rotating electric machine.

2.  The control apparatus as set forth in Claim 1, wherein the target value calculation unit is further configured to individually calculate a positive amplitude (Ifp) and a negative amplitude (Ifm) of the target field current so that amplitudes of phase currents (Iu, Iv, Iw) flowing respectively through the armature windings become equal to each other.

3.  The control apparatus as set forth in Claim 2, wherein the target value calculation unit is further configured to:

    calculate the positive amplitude and the negative amplitude based on a target amount of heat (Q*) which is a target value for the amount of heat generated by the switching control of the upper-arm and lower-arm switches for each phase; and
    calculate the sinusoidal target field current based on the calculated positive and negative amplitudes.

4.  The control apparatus as set forth in Claim 3, wherein the target value calculation unit is further configured to calculate the positive amplitude and the negative amplitude based on an electrical angle of the rotor as well as on the target amount of heat.

5.  The control apparatus as set forth in Claim 2, wherein the target value calculation unit is further configured to:

    calculate an initial value of the target field current based on the inductances of the rotating electric machine; and
    adjust, after the calculation of the initial value, the positive amplitude and the negative amplitude at the initial value so as to make an amplitude of the d-axis current equal to an amplitude of the q-axis current.

6.  The control apparatus as set forth in Claim 5, wherein the target value calculation unit is further configured to:

    calculate the d-axis current flowing through the armature windings based on detection values of a current sensor (51) that detects the phase currents flowing respectively through the armature windings; and

adjust the positive amplitude and the negative amplitude based on the calculated d-axis current.

7. The control apparatus as set forth in Claim 2, wherein the target value calculation unit is further configured to:

calculate an initial value of the target field current based on the inductances of the rotating electric machine; and
adjust, after the calculation of the initial value, the positive amplitude and the negative amplitude at the initial value so as to make temperatures of the upper-arm and lower-arm switches for each phase approach each other.

8. The control apparatus as set forth in Claim 7, wherein the target value calculation unit is further configured to adjust the positive amplitude and the negative amplitude based on detection values of a temperature sensor that detects the temperatures of the upper-arm and lower-arm switches for each phase or detects correlation values of the temperatures.

9. The control apparatus as set forth in any one of Claims 1 to 8, wherein the target value calculation unit is further configured to calculate the inductances of the rotating electric machine based on map information about the inductances or based on physical models whose outputs are the inductances.

10. The control apparatus as set forth in any one of Claims 1 to 8, wherein:

the system further comprises a heat transfer unit (400, 401) that transfers heat generated in the first electric power converter to an object (10) to be heated;
the control apparatus further comprises a determination unit that is configured to determine whether there is a request to raise the temperature of the object to be heated; and
the target value calculation unit is further configured to calculate the target field current and the target d-axis and target q-axis currents when it is determined that there is a request to raise the temperature of the object to be heated.

11. The control apparatus as set forth in any one of Claims 1 to 8, wherein:

the rotating electric machine has a characteristic such that its d-axis inductance is higher than its q-axis inductance; and
the target value calculation unit is further configured to calculate the target d-axis current so as to satisfy a requirement that the vector of the field current flowing through the field winding in the d-q coordinate system have a component that is different in phase by 180° from the vector of armature current flowing through the armature windings in the d-q coordinate system.

12. The control apparatus as set forth in any one of Claims 1 to 8, wherein:

the rotating electric machine has a characteristic such that its q-axis inductance is higher than its d-axis inductance; and
the target value calculation unit is further configured to calculate the target d-axis current so as to satisfy a requirement that the vector of the field current flowing through the field winding in the d-q coordinate system have a component whose phase is the same as that of the vector of armature current flowing through the armature windings in the d-q coordinate system.

13. The control apparatus as set forth in any one of Claims 1 to 8, wherein the second electric power converter comprises two pairs of serially-connected upper-arm and lower-arm switches (SH1, SL1, SH2, SL2) each of which allows flow of electric current in both directions.

14. A program applicable to a system comprising:

a power storage unit (10);
a rotating electric machine (30) having armature windings (34U to 34W) respectively of a plurality of phases and a field winding (32);
a first electric power converter (20) electrically connecting the power storage unit with the armature windings and having upper-arm and lower-arm switches (SUH to SWL) for each phase;
a second electric power converter (40) electrically connecting the power storage unit with the field winding; and
a computer (60a),

the program being configured to cause the computer to execute:

a target value calculation process of calculating a target field current (If*) to be supplied to the field winding and target d-axis and target q-axis currents (Id*, Iq*) to be supplied to the armature windings;
an armature control process of performing switching control of the upper-arm and lower-arm switches for each phase so as to control d-axis current (Idr) flowing through the armature windings to the calculated target d-axis current and control q-axis current (Iqr) flowing through the armature windings to the calculated target q-axis current; and
a field control process of performing switching control of the second electric power converter so as to control field current (Ifr) flowing through the field winding to the calculated target field current, wherein
the target value calculation process includes:

a process of calculating the target field current that is sinusoidal; and
a process of calculating, based on the calculated target field current and inductances (Ld, Lq, Lmf) of the rotating electric machine, the target d-axis current so as to satisfy both a requirement of making torque generated by the rotating electric machine a torque with which a rotor of the rotating electric machine can be kept in a rotation-stopped state and a requirement that the vector of the field current flowing through the field winding in a d-q coordinate system have a component that reduces reluctance torque of the rotating electric machine.

# FIG.1

# FIG.2

# FIG.3

# FIG.4

Ld>Lq

q AXIS

Ivt_3ph

ROTATION

d AXIS

Ivt_fld

# FIG.5

⟨COMPARATIVE EXAMPLE⟩

# FIG.6

〈COMPARATIVE EXAMPLE〉

# FIG.7

〈PRESENT EMBODIMENT〉

# FIG.8

EP 4 704 331 A1

# FIG.9

```
          ┌─────────────┐
          │    START     │
          └──────┬──────┘
                 │                          ╭─ S10
          ◇──────┴──────────────────◇  NO
          ╱ TEMPERATURE-RAISING REQUEST ? ╲──────┐
          ╲────────────┬─────────────╱          │
                 │ YES                           │
                 ▼                   ╭─ S11       │
          ┌──────┴──────────────────┐           │
          ║  If* DETERMINATION PROCESS ║          │
          └──────┬──────────────────┘           │
                 │                               │
    ┌────────────┤                   ╭─ S12      │
    │            ▼                               │
    │     ┌──────┴──────────────────┐           │
    │     │  ELECTRIC CURRENT CONTROL │           │
    │     └──────┬──────────────────┘           │
    │            │                   ╭─ S13       │
    │     ◇──────┴──────────────◇                │
    │ NO  ╱      Tobj ≥ T* ?      ╲               │
    └─────╲────────┬─────────────╱               │
                 │ YES                            │
                 ▼◄───────────────────────────────┘
          ┌─────────────┐
          │     END      │
          └─────────────┘
```

# FIG.10

```
         ┌─────────────────────┐
         │  If* DETERMINATION  │
         │      PROCESS        │
         └──────────┬──────────┘
                    │               ⌐S20
         ┌──────────▼──────────┐
         │     ACQUIRE Q*      │
         └──────────┬──────────┘
                    │               ⌐S21
         ┌──────────▼──────────┐              ┌──────────────────────┐
         │     CALCULATE       │              ▼                      │
         │ Iuamp*, Ivamp*, Iwamp* │                    ⌐S26          │
         └──────────┬──────────┘        ┌──────────▼──────────┐     │
                    │               ⌐S22 │    CALCULATE If*    │     │
         ┌──────────▼──────────┐        └──────────┬──────────┘     │
         │ CALCULATE Idamp*, Iqamp* │              │          ⌐S27  │
         └──────────┬──────────┘        ┌──────────▼──────────┐     │
                    │               ⌐S23 │  CALCULATE Idr, Iqr │     │
         ┌──────────▼──────────┐        └──────────┬──────────┘     │
         │  CALCULATE Idr, Iqr │                   │          ⌐S28  │
         └──────────┬──────────┘        ┌──────────▼──────────┐     │
                    │               ⌐S24 │ CALCULATE Ld, Lq, Lmf │   │
         ┌──────────▼──────────┐        └──────────┬──────────┘     │
         │ CALCULATE Ld, Lq, Lmf │                 │          ⌐S29  │
         └──────────┬──────────┘        ┌──────────▼──────────┐     │
                    │               ⌐S25 │   CALCULATE Id*     │     │
         ┌──────────▼──────────┐        └──────────┬──────────┘     │
         │ CALCULATE Ifampini  │                   │          ⌐S30  │
         └──────────┬──────────┘        ┌──────────▼──────────┐     │
                    │                    │   CALCULATE Iq*     │     │
                    └────────────────►   └──────────┬──────────┘     │
                                                    │          ⌐S31  │
                                         ┌──────────▼──────────┐     │
                                         │     Ifr CONTROL     │     │
                                         └──────────┬──────────┘     │
                                                    │          ⌐S32  │
                                         ┌──────────▼──────────┐     │
                                         │  Idr & Iqr CONTROL  │     │
                                         └──────────┬──────────┘     │
                                                    │          ⌐S33  │
                                              ╱─────▼─────╲          │
                                             ╱   ELECTRIC   ╲   NO   │
                                            ╱ CURRENT AMPLITUDE╲─────┤
                                            ╲ DIFFERENCES SMALL ?╱   │
                                             ╲─────┬─────╱          │
                                                   │YES      ⌐S34   │
                                                   │   ┌────────────┴──────┐
                                                   │   │ ADJUST AMPLITUDES │
                                                   │   │     OF If*        │
                                                   │   └───────────────────┘
                                         ┌─────────▼─────────┐
                                         │      RETURN       │
                                         └───────────────────┘
```

# FIG.11

Ld>Lq

# FIG.12

Lq>Ld

# FIG.13

Lq>Ld

q AXIS

ROTATION

Ivt_3ph

d AXIS

Ivt_fld

# FIG.14

Lq>Ld

q AXIS

ROTATION

Ivt_3ph

Ivt_fld

d AXIS

# FIG.15

EP 4 704 331 A1

# FIG.16

EP 4 704 331 A1

# FIG.17

```
        ┌─────────────────────────────┐
        │   If* DETERMINATION PROCESS  │
        └─────────────────────────────┘
                      │
                      ▼
        ┌─────────────────────────────┐
        │       ACQUIRE Q*, θe          │──── S40
        └─────────────────────────────┘
                      │
                      ▼
        ┌─────────────────────────────┐
        │ CALCULATE Iuamp*, Ivamp*, Iwamp* │──── S41
        └─────────────────────────────┘
                      │
                      ▼
        ┌─────────────────────────────┐
        │       CALCULATE Iqamp*        │──── S42
        └─────────────────────────────┘
                      │
                      ▼
        ┌─────────────────────────────┐
        │       CALCULATE Ifp, Ifm      │──── S43
        └─────────────────────────────┘
                      │
                      ▼
        ┌─────────────────────────────┐
        │       CALCULATE If*           │──── S44
        └─────────────────────────────┘
                      │
                      ▼
        ┌─────────────────────────────┐
        │       CALCULATE Idr, Iqr      │──── S45
        └─────────────────────────────┘
                      │
                      ▼
        ┌─────────────────────────────┐
        │     CALCULATE Ld, Lq, Lmf     │──── S46
        └─────────────────────────────┘
                      │
                      ▼
        ┌─────────────────────────────┐
        │       CALCULATE Id*           │──── S47
        └─────────────────────────────┘
                      │
                      ▼
        ┌─────────────────────────────┐
        │       CALCULATE Iq*           │──── S48
        └─────────────────────────────┘
                      │
                      ▼
        ┌─────────────────────────────┐
        │           RETURN             │
        └─────────────────────────────┘
```

# FIG.18

# FIG.19

```
      If* DETERMINATION
          PROCESS
              │
              │  ┌─ S50
              ▼
        ┌───────────────┐
        │  ACQUIRE Q*   │
        └───────────────┘
              │  ┌─ S51
              ▼
        ┌───────────────┐
        │  CALCULATE    │
        │ Iuamp*, Ivamp*, Iwamp* │
        └───────────────┘
              │  ┌─ S52                    ┌─ S56
              ▼                             ▼
        ┌───────────────┐           ┌───────────────┐
        │ CALCULATE Idamp*, Iqamp* │ │  CALCULATE If* │
        └───────────────┘           └───────────────┘
              │  ┌─ S53                    │  ┌─ S57
              ▼                             ▼
        ┌───────────────┐           ┌───────────────┐
        │ CALCULATE Idr, Iqr │       │ CALCULATE Idr, Iqr │
        └───────────────┘           └───────────────┘
              │  ┌─ S54                    │  ┌─ S58
              ▼                             ▼
        ┌───────────────┐           ┌───────────────┐
        │ CALCULATE Ld, Lq, Lmf │    │ CALCULATE Ld, Lq, Lmf │
        └───────────────┘           └───────────────┘
              │  ┌─ S55                    │  ┌─ S59
              ▼                             ▼
        ┌───────────────┐           ┌───────────────┐
        │ CALCULATE Ifampini │       │  CALCULATE Id* │
        └───────────────┘           └───────────────┘
                                          │  ┌─ S60
                                          ▼
                                    ┌───────────────┐
                                    │  CALCULATE Iq* │
                                    └───────────────┘
                                          │  ┌─ S61
                                          ▼
                                    ┌───────────────┐
                                    │   Ifr CONTROL  │
                                    └───────────────┘
                                          │  ┌─ S62
                                          ▼
                                    ┌───────────────┐
                                    │ Idr & Iqr CONTROL │
                                    └───────────────┘
                                          │  ┌─ S63
                                          ▼
                                    ╱─────────────────╲   NO
                                   │   TEMPERATURE    │────────┐
                                   │ DIFFERENCE SMALL ? │       │  ┌─ S64
                                    ╲─────────────────╱        ▼
                                          │ YES        ┌───────────────┐
                                          │            │ ADJUST AMPLITUDES OF If* │
                                          │            └───────────────┘
                                          ▼
                                    ┌───────────┐
                                    │  RETURN   │
                                    └───────────┘
```

## INTERNATIONAL SEARCH REPORT

| International application No. |
|---|
| **PCT/JP2024/012779** |

| A. | CLASSIFICATION OF SUBJECT MATTER |
|---|---|

*H02P 21/12*(2016.01)i; *H02P 27/06*(2006.01)i
FI:    H02P21/12; H02P27/06

According to International Patent Classification (IPC) or to both national classification and IPC

| B. | FIELDS SEARCHED |
|---|---|

Minimum documentation searched (classification system followed by classification symbols)

H02P21/12; H02P27/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2020-137191 A (KABUSHIKI KAISHA TOYOTA CHUO KENKYUSHO) 31 August 2020 (2020-08-31)<br>    paragraphs [0019]-[0065], fig. 1-10 | 1-14 |
| A | JP 5259752 B2 (HITACHI, LTD.) 07 August 2013 (2013-08-07)<br>    paragraphs [0012]-[0065], fig. 1-7 | 1-14 |
| P, A | WO 2024/009686 A1 (SOKEN, INC.) 11 January 2024 (2024-01-11)<br>    entire text, all drawings | 1-14 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
|---|---|
| **04 June 2024** | **18 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/012779**

| Patent document cited in search report | Publication date (day/month/year) | Patent family member(s) | Publication date (day/month/year) |
|---|---|---|---|
| JP 2020-137191 A | 31 August 2020 | (Family: none) | |
| JP 5259752 B2 | 07 August 2013 | US 2012/0200241 A1 paragraphs [0023]-[0074], fig. 1-7 CN 102627073 A | |
| WO 2024/009686 A1 | 11 January 2024 | (Family: none) | |

Form PCT/ISA/210 (patent family annex) (July 2022)

**EP 4 704 331 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023070828 A

- JP 5259752 B